(19)

Europäisches Patentamt
European Patent Office
Office européen des brevets

(11)  **EP 4 450 158 A1**

(12)  **EUROPEAN PATENT APPLICATION**
published in accordance with Art. 153(4) EPC

(43) Date of publication:
**23.10.2024  Bulletin 2024/43**

(21) Application number: **23752465.7**

(22) Date of filing: **13.02.2023**

(51) International Patent Classification (IPC):
**B01J 23/38** (2006.01)      **B01J 37/02** (2006.01)
**B01D 53/94** (2006.01)

(52) Cooperative Patent Classification (CPC):
**B01D 53/56; B01D 53/86; B01D 53/94;
B01J 23/38; B01J 23/656; B01J 23/89;
B01J 27/135; B01J 27/187; B01J 27/24;
B01J 35/56; B01J 37/02;** Y02A 50/20

(86) International application number:
**PCT/CN2023/075761**

(87) International publication number:
**WO 2023/151687 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.02.2022  CN 202210135505**

(71) Applicants:
• **Grirem Hi-Tech Co., Ltd.
Langfang, Hebei 065201 (CN)**
• **Rare Earth Functional Materials (Xiong'An)
Innovation Center Co., Ltd.
Baoding, Hebei 071700 (CN)**
• **Grirem Advanced Materials Co., Ltd.
Beijing 100088 (CN)**

(72) Inventors:
• **ZHAO, Zheng
Beijing 100088 (CN)**
• **HUANG, Xiaowei
Beijing 100088 (CN)**
• **ZHANG, Yongqi
Beijing 100088 (CN)**
• **HOU, Yongke
Beijing 100088 (CN)**
• **FENG, Zongyu
Beijing 100088 (CN)**
• **ZHAO, Yuxin
Beijing 100088 (CN)**
• **XU, Yang
Beijing 100088 (CN)**

(74) Representative: **Huang, Liwei
Cäcilienstraße 12
40597 Düsseldorf (DE)**

(54)  **GRAIN BOUNDARY AND SURFACE-SUPPORTED NOBLE METAL CATALYST, AND PREPARATION METHOD THEREFOR AND APPLICATION THEREOF**

(57)      The present invention relates to a catalyst with noble metal loaded at surface and at grain boundary, preparation method and application thereof, wherein the noble metal is dispersed at the grain boundary and surface of alumina and/or a rare earth manganese-zirconium composite oxide to form a multiphase interface, which achieves the following beneficial technical effects: firstly, the multiphase interface has a larger steric hindrance and a stronger anchoring effect, which can inhibit the migration, agglomeration, and growth of the noble metal at high temperatures, increase the high-temperature stability and catalytic performance of the noble metal, and reduce the usage of the noble metal; secondly, the multiphase interface exhibits a synergistic catalytic effect, which can reduce the activation energy of lattice oxygen and increase the quantity of active oxygen, thereby enhancing the NO oxidation and low-temperature catalytic activity.

FIG. 1

EP 4 450 158 A1

**Description**

**Cross-Reference to Related Applications**

The present application is based on and claims priority to Chinese patent application No. 202210135505.3, filed on February 14, 2022, the entire content of which is incorporated herein by reference.

**Technical Field**

The present invention relates to the technical field of noble metal-loading catalysts, and in particular relates to a catalyst with noble metal loaded at surface and at grain boundary and a honeycomb noble metal catalyst, as well as a preparation method and application thereof.

**Background Art**

In recent years, rare-ignition engines (diesel and rare-ignition gasoline engines) have received wide attention due to their high fuel economy and low greenhouse gas emissions. However, $NO_x$, CO and HC emitted from the exhaust of dilute combustion engines pose a serious threat to human health. At present, the environmental protection requirements for diesel exhaust are becoming more and more stringent by governments all over the world. In terms of the mechanism of the reaction, HC and CO are easily oxidized and removed under aerobic conditions, whereas the $NO_x$ reaction is more complicated, which needs a highly efficient catalyst with high oxygen storage capacity and high low-temperature activity to achieve better elimination. When driving at high speeds, the temperature of diesel exhaust can reach as high as 600 °C or more, so the catalyst is also required to have high activity at high temperatures. The noble metals of catalysts in the prior art are easily agglomerated and poorly dispersed at high temperatures, which cannot effectively treat diesel exhaust and therefore cause environmental pollution, so there is an urgent need for the development of efficient catalysts for purification of diesel exhaust $NO_x$ with high stability and high activity.

Diesel oxidation catalysts (DOC) have received much attention in recent years, and the powerful NO oxidizability of DOC can greatly improve SCR low-temperature $NO_x$ conversion (Russell A, Epling W S. Catalysis Reviews, 2011, 53(4): 337-423). Currently, commercial DOC catalysts have many drawbacks, such as the tendency of agglomerative deactivation of noble metals at high temperatures and high reaction temperatures (Caliskan H, Mori K. Energy, 2017, 128. 128-144). Therefore, the study of DOC catalysts with high noble metal dispersion and high activity has become the focus of diesel post-treatment systems. In order to obtain a higher NO catalytic oxidation performance, it is necessary to develop a highly stable and active DOC catalyst.

**Summary of the Invention**

Based on the above situation of the prior art, the present invention aims to provide a catalyst with noble metal loaded at surface and at grain boundary and a preparation method and application thereof, wherein, the noble metal is dispersed at the grain boundary and surface of alumina and/or a rare earth manganese-zirconium composite oxide to form a multiphase interface, which can inhibit the migration, agglomeration, and growth of the noble metal at high temperatures, increase the high-temperature stability and catalytic performance of the noble metal, and reduce the usage of the noble metal; which can also reduce the activation energy of lattice oxygen and increase the quantity of active oxygen, thereby enhancing the NO oxidation and low-temperature catalytic activity.

To achieve the above object, according to a first aspect of the present invention, provided is a catalyst with noble metal loaded at surface and at grain boundary comprising a noble metal G, alumina and/or a rare earth manganese-zirconium composite oxide, wherein the noble metal G is dispersed at the grain boundary and surface of alumina and/or the rare earth manganese-zirconium composite oxide, and the rare earth manganese-zirconium composite oxide has the formula of $RE_aMn_bZr_cM_dO_{(2-\delta)}D_\beta$, where,

RE is a rare earth element, M is a cationic doping element, and D is an anionic doping element;

$$0.1 \leq a \leq 0.5,\ 0.05 \leq b \leq 0.3,\ 0.2 \leq c \leq 0.8,\ 0 \leq d \leq 0.2,\ 0 \leq \delta \leq 0.1,\ 0 \leq \beta \leq 0.1,\ a+b+c+d=1.$$

According to a second aspect of the present invention, provided is a honeycomb noble metal catalyst comprising a honeycomb carrier, a noble metal G, and an active coating, wherein the active coating contains alumina and/or the rare earth manganese-zirconium composite oxide $RE_aMn_bZr_cM_dO_{(2-\delta)}D_\beta$, and the noble metal G is dispersed at the grain boundary and surface of the active coating, where

RE is a rare earth element, M is a cationic doping element, and D is an anionic doping element;

$$0.1 \leq a \leq 0.5,\ 0.05 \leq b \leq 0.3,\ 0.2 \leq c \leq 0.8,\ 0 \leq d \leq 0.2,\ 0 \leq \delta \leq 0.1,\ 0 \leq \beta \leq 0.1,\ a+b+c+d=1.$$

Further, the rare earth manganese-zirconium composite oxide accounts for 0 to 100%, preferably 30 to 70%, of the total mass of the active coating.

Further, the noble metal G at the grain boundary and surface is in a metallic state, or in a metallic and oxidization state.

Further, the noble metal G comprises one or a combination of more than one selected from Pt, Pd, Rh, Ir, Os, Ru, Au, and Ag, preferably one or a combination of more than one selected from Pt, Pd, Rh, and Ru, further preferably a combination of Pt and Pd.

Further, the rare earth element RE comprises one or a combination of more than one selected from La, Ce, Pr, Nd, Sm, Eu, Gd, Tb, Dy, Ho, Er, Tm, Yb, Lu, Y, and Sc, preferably one or a combination of more than one selected from La, Ce, Pr, Nd, Sm, Eu, Gd, Yb, and Y; the doping element M is one or a combination of more than one selected from a transition metal element, an alkaline earth metal elements, Al, Si, and Sn; the doping element D comprises one or a combination of more than one selected from anions N, P, and F.

Further, the transition metal element M comprises one or a combination of more than one selected from Fe, Co, Ni, Cu, Zn, Ti, Hf, V, Cr, Nb, Mo, and W, preferably one or a combination of more than one selected from Fe, Co, Ni, Cu, and Hf; the alkaline earth metal element is one or a combination of more than one selected from Mg, Ca, Sr, and Ba, preferably one or a combination of more than one selected from Sr and Ba.

Further, the loading amount of the noble metal G in the catalyst is 0.01% to 2% by mass, preferably 0.1% to 1% by mass.

Further, the loading amount of the noble metal G in the catalyst is 0.03 to 2.0 g/L, preferably 0.15 to 1.5 g/L.

Further, the rare earth manganese-zirconium composite oxide in the catalyst comprises a core-shell structure having an inner core comprising a rare earth and zirconium element and an outer shell comprising a rare earth and manganese element.

Further, the rare earth manganese-zirconium composite oxide in the catalyst comprises a rare earth zirconium-based oxide with gradient distribution of elements.

Further, the honeycomb carrier is made of a porous ceramic or metal, and further, the honeycomb carrier may be one or a combination of more than one selected from cordierite, cordierite-alumina, silicon nitride, silicon carbide, alumina-silica-magnesium oxide, zirconium silicate-sillimanite, magnesium silicate, and aluminum silicate.

According to a third aspect of the present invention, there is provided a method for preparing the catalyst with noble metal loaded at surface and at grain boundary of the first aspect of the invention, comprising the steps of:

S1. mixing the rare earth manganese-zirconium composite oxide and/or active alumina evenly with a liquid salt of the noble metal G, and drying;

S2. performing one or two heat treatments on the product obtained in step S1;

S3. performing one or two reductive calcinations on the product obtained in step S2 under air or a reducing atmosphere, to obtain a catalyst with the grain boundary and surface of the rare earth manganese-zirconium composite oxide and/or alumina loaded with the noble metal.

According to a fourth aspect of the present invention, there is provided a method for preparing the honeycomb noble metal catalyst of the second aspect of the present invention, wherein the honeycomb noble metal catalyst is layered or partitioned coated with one or more coating materials selected from alumina, a rare earth manganese-zirconium composite oxide, alumina with the boundary and surface loaded with the noble metal, the rare earth manganese-zirconium composite oxide with the grain boundary and surface loaded with the noble metal, and a mixture of rare earth manganese-zirconium composite oxide and alumina with their grain boundaries and surfaces loaded with the noble metal, the method comprising the steps of:

A1. preparing a coating slurry by mixing the one or more coating materials with an adhesive, an acidity regulator and water evenly in one or more steps;

A2. coating the coating slurry obtained in step A1 onto the honeycomb carrier in one or more steps, or onto the honeycomb carrier in a layered or partitioned manner, and drying;

A3. performing heat treatment and/or calcination on the product obtained in step A2 under air or a reducing atmosphere, to obtain the honeycomb catalyst with the grain boundary and surface loaded with the noble metal.

According to a fifth aspect of the present invention, there is provided a method for preparing the honeycomb noble metal catalyst of the second aspect of the present invention, the method comprising: preparing a coating slurry by mixing the rare earth manganese-zirconium composite oxide and/or alumina, a liquid salt of the noble metal, an adhesive, an acidity regulator and water evenly in one or more steps; coating the obtained slurry onto a honeycomb carrier in one or more steps, or onto the honeycomb carrier in a layered or partitioned manner, and drying; performing heat treatment and/or calcination on the dried honeycomb carrier under air or a reducing atmosphere, to obtain the honeycomb catalyst with the grain boundary and surface loaded with the noble metal.

Further, the heat treatment temperature is 200 to 750 °C, and the heat treatment time is 0.5 h to 24 h; preferably, the heat treatment temperature is 400 to 700 °C, and preferably, the heat treatment time is 1 h to 12 h.

Further, the calcination temperature is 400 to 850 °C, and the calcination time is 0.5 h to 24 h; preferably, the calcination temperature is 450 to 750 °C, and the calcination time is 1 h to 12 h.

Further, the liquid salt of the noble metal G comprises one or a combination of more than one molten salt or aqueous solution of chlorate, nitrate, acetate, and citrate.

Further, the reducing atmosphere comprises one or more selected from CO and $H_2$.

According to a sixth aspect of the present invention, there is provided use of the catalysts in the first and second aspects of the present invention in the fields of vehicle exhaust purification, industrial organic exhaust treatment, catalytic combustion of natural gas, petrochemicals, hydrogen energy, and batteries.

In summary, the present invention provides a catalyst with noble metal loaded at surface and at grain boundary and a preparation method and application thereof, wherein the noble metal G is dispersed at the grain boundary and surface of alumina and/or a rare earth manganese-zirconium composite oxide to form a multiphase interface, which achieves the following beneficial technical effects: firstly, the multiphase interface has a larger steric hindrance and a stronger anchoring effect, which can inhibit the migration, agglomeration, and growth of the noble metal at high temperatures, increase the high-temperature stability and catalytic performance of the noble metal, and reduce the usage of the noble metal; secondly, the multiphase interface exhibits a synergistic catalytic effect, which can reduce the activation energy of lattice oxygen and increase the quantity of active oxygen, thereby enhancing the NO oxidation and low-temperature catalytic activity. Moreover, according to the present invention, the types and contents of elements in the outer shell and/ or inner core are designed based on theoretically calculated differences in elemental surface energy and oxygen vacancy formation energy, which comprehensively improves the thermal stability and oxygen storage and release properties of the rare earth manganese-zirconium composite oxide; still, the types and contents of elements in the gradient structure are designed based on theoretically calculated differences in elemental surface energy and oxygen vacancy formation energy, such that the content of a specific element increases or decreases gradually from inside to outside in the radial direction of grains, thus comprehensively improving the thermal stability and oxygen storage and release properties of the rare earth cerium-zirconium composite oxide.

## Brief Description of Drawings

FIG. 1 shows a flowchart of a method for preparing a catalyst with noble metal loaded at surface and at grain boundary provided by examples of the present invention;
FIG. 2 shows a flowchart of a method for preparing a honeycomb noble metal catalyst provided by examples of the present invention.

## Detailed Description of the Invention

In order to make the purpose, technical solutions and advantages of the invention clearer, the invention will be further explained in detail below in connection with the embodiments with reference to the drawings. It should be understood that these descriptions are merely exemplary and are not intended to limit the scope of the invention. In addition, descriptions of well-known structures and techniques are omitted below to avoid unnecessary confusion about the concepts of the present invention.

Examples of the present invention provide a catalyst with noble metal loaded at surface and at grain boundary comprising a noble metal G, alumina and/or a rare earth manganese-zirconium composite oxide, wherein, the noble metal G is dispersed at the grain boundary and surface of alumina and/or the rare earth manganese-zirconium composite oxide. The simultaneous presence of the noble metal G at both the grain boundary and the surface can not only fully utilize the new site loading the noble metal at the grain boundary, but also reduce the distribution density of the noble metal loaded at the surface, thereby forming a grain boundary-surface double-anchoring structure, which not only can inhibit the migration and agglomeration of the noble metal at high temperatures but also can improve the thermal stability of the noble metal. The rare earth manganese-zirconium composite oxide has the chemical formula $RE_aMn_bZr_cM_dO_{(2-\delta)}D_\beta$, where

RE is a rare earth element, M is a cationic doping element, and D is an anionic doping element;

$$0.1 \leq a \leq 0.5,\ 0.05 \leq b \leq 0.3,\ 0.2 \leq c \leq 0.8,\ 0 \leq d \leq 0.2,\ 0 \leq \delta \leq 0.1,\ 0 \leq \beta \leq 0.1,\ a+b+c+d=1.$$

Examples of the present invention also provides a honeycomb noble metal catalyst comprising a honeycomb carrier, a noble metal G, and a active coating comprising alumina and/or a rare earth manganese-zirconium composite oxide $RE_aMn_bZr_cM_dO_{(2-\delta)}D_\beta$, wherein, the noble metal G is dispersed at the grain boundary and surface of the active coating. The simultaneous presence of the noble metal G at both the grain boundary and the surface of the active coating can not only fully utilize the new site loading the noble metal at the grain boundary, but also reduce the distribution density of the noble metal loaded at the surface, thereby forming a grain boundary-surface double-anchoring structure, which not only can inhibit the migration and agglomeration of the noble metal at high temperatures but also can improve the thermal stability of the noble metal, where

RE is a rare earth element, M is a cationic doping element, and D is an anionic doping element;

$$0.1 \leq a \leq 0.5,\ 0.05 \leq b \leq 0.3,\ 0.2 \leq c \leq 0.8,\ 0 \leq d \leq 0.2,\ 0 \leq \delta \leq 0.1,\ 0 \leq \beta \leq 0.1,\ a+b+c+d=1.$$

The noble metal G may be, for example, one or a combination of more than one selected from Pt, Pd, Rh, Ir, Os, Ru, Au, and Ag, preferably one or a combination of more than one selected from Pt, Pd, Rh, and Ru, further preferably a combination of Pt and Pd; the noble metal G at the grain boundary accounts for 10-70 mol%; the noble metal G at the grain boundary or surface is in a metallic state, or in a metallic and oxidization state. Preferably, converting to a metallic state is more conductive to the catalytic effect. In the catalyst with noble metal loaded at surface and at grain boundary, the loading amount of the noble metal G is 0.01% to 2% by mass, preferably 0.1% to 1% by mass, further preferably 0.1% to 0.5% by mass. In the honeycomb noble metal catalyst, the loading amount of the noble metal G is 0.03 to 2.0 g/L, preferably 0.15 to 1.5 g/L. The rare earth manganese-zirconium composite oxide accounts for 0 to 100%, preferably 30 to 70%, of the in total mass of the active coating.

In the catalyst with noble metal loaded at surface and at grain boundary and the honeycomb noble metal catalyst provided by examples of the present inventions, the noble metal is dispersed at the grain boundary and surface of alumina and/or the rare earth manganese-zirconium composite oxide to form a multiphase interface. The multiphase interface has a larger steric hindrance and a stronger anchoring effect, which can inhibit the migration, agglomeration, and growth of the noble metal at high temperatures, increase the high-temperature stability and catalytic performance of the noble metal, and reduce the usage of the noble metal. The multiphase interface also exhibits a synergistic catalytic effect, which can reduce the activation energy of lattice oxygen and increase the quantity of active oxygen, thereby enhancing the NO oxidation and low-temperature catalytic activity.

The rare earth manganese-zirconium composite oxide in the catalyst provided by the examples of the present invention comprises a core-shell structure having an inner core comprising a rare earth and zirconium element and an outer shell comprising a rare earth and manganese element. For additional features and advantages of the core-shell structure of a rare earth manganese-zirconium composite oxide, please refer to the Chinese patent application with the application number of ZL201910833257.8 and the invention title of "Rare earth manganese-zirconium composite oxide with core-shell structure, and preparation method thereof" filed on September 04, 2019 and its full description. According to the present invention, the types and contents of shell or/and core elements are designed based on theoretically calculated differences in elemental surface energy and oxygen vacancy formation energy to comprehensively enhance the thermal stability and oxygen storage and release properties of the rare earth manganese-zirconium composite oxide.

The rare earth manganese-zirconium composite oxide in the catalyst provided by examples of the present invention, comprises a rare earth zirconium-based oxide with gradient distribution of elements. For additional features and advantages of the gradient distribution of elements of the rare earth zirconium-based oxide, please refer to the Chinese patent application with the application number of CN202010982979.2 and the invention title of "Cerium-zirconium-based composite oxide with elements in gradient distribution and preparation method thereof" filed on September 17, 2020 and its full description. According to the present invention, the types and contents of elements in the gradient structure are designed and controlled based on theoretically calculated differences in elemental surface energy and oxygen vacancy formation energy, so that the content of a specific element increases or decreases gradually from inside to outside in the radial direction of grains, thus comprehensively improving the thermal stability and the oxygen storage and release properties of the rare earth manganese-zirconium composite oxide.

The rare earth element RE in the rare earth manganese-zirconium composite oxide comprises one or a combination of more than one selected from La, Ce, Pr, Nd, Sm, Eu, Gd, Tb, Dy, Ho, Er, Tm, Yb, Lu, Y, and Sc, preferably one or a combination of more than one selected from La, Ce, Pr, Nd, Sm, Eu, Gd, Yb, and Y. The doping element M is one or a combination of more than one selected from a transition metal element, an alkaline earth metal elements, Al, Si, and Sn; the doping element D comprises one or a combination of more than one selected from anions N, P, and F.

In the rare earth manganese-zirconium composite oxide , the transition metal element M comprises one or a combination of more than one selected from Fe, Co, Ni, Cu, Zn, Ti, Hf, V, Cr, Nb, Mo, and W, preferably one or a combination of more than one selected from Fe, Co, Ni, Cu, and Hf; the alkaline earth metal element is one or a combination of more than one selected from Mg, Ca, Sr, and Ba, preferably one or a combination of more than one selected from Sr and Ba.

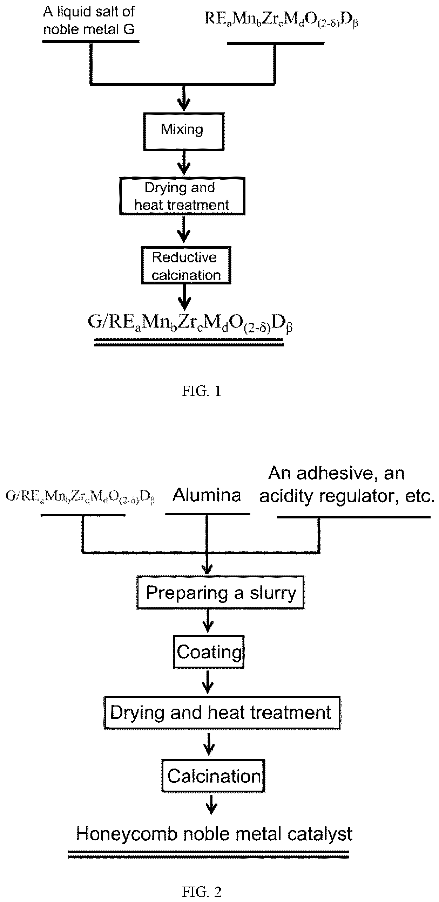

Examples of the present invention also provide a method for preparing a catalyst with noble metal loaded at surface and at grain boundary to prepare the catalyst with noble metal loaded at surface and at grain boundary in the above examples, with the flow chart of the method shown in FIG. 1, the method comprising the following steps:

S1. mixing the rare earth manganese-zirconium composite oxide and/or alumina evenly with a liquid salt of the noble metal G and drying, the liquid salt of the noble metal G being selected from one or a combination of more than one molten salt or aqueous solution of chlorate, nitrate, acetate, and citrate, wherein, the drying temperature is 50 to 200°C, and the drying time is 1 h to 48 h;

S2. performing one or two heat treatments on the product obtained in step S1 at a temperature of 200 to 750 °C for 0.5 h to 24 h; preferably, the heat treatment temperature is 400 to 700 °C, and the heat treatment time is 1 h to 12 h, wherein, in order to meet the special requirements on the performances of the catalyst with noble metal loaded at surface and at grain boundary in different applications, there is a need to adjust or change the microstructure of the catalyst, which requires the use of different heat treatment systems, such as step-by-step heat treatment, to introduce more noble metals into the grain boundary and surface more uniformly and stably. Water washing, water quenching and other treatments can also be carried out between the two steps of heat treatment;

S3. performing one or two reductive calcinations on the product obtained in step S2 under air or a reducing atmosphere, to obtain a catalyst with the grain boundary and surface of the rare earth manganese-zirconium composite oxide and/or alumina loaded with the noble metal, wherein, the loading amount of the noble metal G in the catalyst is 0.01% to 2% by mass, preferably 0.1% to 1% by mass; the reducing atmosphere comprises one or a combination of more than one selected from CO and $H_2$; the calcination temperature is 400 to 850 °C, and the calcination time is 0.5 h to 24 h; preferably, the calcination temperature is 450 to 750 °C, and the calcination time is 1 h to 12 h. The obtained catalyst with noble metal loaded at surface and at grain boundary is subjected to one or two calcinations to give a catalyst material with a specific structure. It is also possible to avoid secondary sintering agglomeration by surface treatment after one calcination.

In performing heat treatment in step S2 in the above examples, the grain boundaries of the rare earth manganese-zirconium composite oxide and/or alumina start to be activated by controlling the appropriate temperature, thereby serving as channels for noble metal diffusion, and the depth and distribution of noble metal diffusion along the grain boundary can be controlled by controlling the heat treatment time. The noble metals at the grain boundary and surface can be reduced or partially reduced by controlling the reducing atmosphere, the reducing temperature, and the reducing time in step S3. The noble metal is dispersed at the grain boundary and surface of alumina and/or the rare earth manganese-zirconium composite oxide by steps S2 and S3 to form a multiphase interface. The multiphase interface has a larger steric hindrance and a stronger anchoring effect, which can inhibit the migration, agglomeration, and growth of the noble metal at high temperatures, increase the high-temperature stability and catalytic performance of the noble metal, and reduce the usage of the noble metal. The multiphase interface also exhibits a synergistic catalytic effect, which can reduce the activation energy of lattice oxygen and increase the quantity of active oxygen, thereby enhancing the NO oxidation and low-temperature catalytic activity.

The examples of the present invention further provide a method for preparing a honeycomb noble metal catalyst to prepare the honeycomb noble metal catalyst provided in the above examples, wherein the honeycomb noble metal catalyst is layered or partitioned coated with one or more coating materials selected from alumina, a rare earth manganese-zirconium composite oxide, alumina with the boundary and surface loaded with the noble metal, a rare earth manganese-zirconium composite oxide with the grain boundary and surface loaded with the noble metal, and a mixture of rare earth manganese-zirconium composite oxide and alumina with their grain boundaries and surfaces loaded with the noble metal, with the flow chart of the method shown in FIG. 2, the method comprising the following steps:

A1. preparing a coating slurry by mixing one or more of the coating materials with an adhesive, an acidity regulator and water evenly in one or more steps;

A2. coating the coating slurry obtained in step A1 onto the honeycomb carrier in one or more steps, or onto the honeycomb carrier in a layered or partitioned manner, and drying, wherein, the honeycomb carrier is made of a porous ceramic or metal; the drying temperature is 50 to 200°C and the drying time is 1 h to 48 h.

A3. performing heat treatment and/or calcination on the product obtained in step A2 under air or a reducing atmosphere, to obtain the honeycomb catalyst with the grain boundary and surface loaded with the noble metal. The loading amount of the noble metal G in the catalyst is 0.03 to 2.0 g/L, preferably 0.15 to 1.5 g/L. The heat treatment temperature is 200 to 750 °C, and the heat treatment time is 0.5 h to 24 h; preferably, the heat treatment temperature is 400 to 700 °C, and the heat treatment time is 1 h to 12 h. In order to meet the special requirements on the catalytic performance of the honeycomb noble metal catalyst in different applications, there is a need to adjust or change the microstructure of the catalyst, which requires the use of different heat treatment systems, such as step-by-step heat treatment, to introduce more noble metals into the grain boundary more uniformly and stably. Water washing, water quenching and other treatments can also be carried out between the two steps of heat treatment. The calcination temperature is 400 to 850 °C, and the calcination time is 0.5 h to 24 h; preferably, the calcination temperature is 450 to 750 °C, and the calcination time is 1 h to 12 h. The above obtained honeycomb noble metal catalyst is subjected to one or two calcinations to give a catalyst with a specific structure. It is also possible to avoid secondary sintering agglomeration by surface treatment after one calcination.

Examples of the present invention further provide a method for preparing a honeycomb noble metal catalyst to prepare the honeycomb noble metal catalyst provided in the above examples, the method comprising: preparing a coating slurry by mixing a rare earth manganese-zirconium composite oxide and/or alumina, a liquid salt of the noble metal, an adhesive, an acidity regulator and water evenly in one or more steps; coating the obtained slurry onto a honeycomb carrier in one or more steps, or onto the honeycomb carrier in a layered or partitioned manner, and drying; performing heat treatment and/or calcination on the dried honeycomb carrier under air or a reducing atmosphere, to obtain the honeycomb catalyst with the grain boundary and surface loaded with the noble metal.

The examples of the present invention provide a catalyst with noble metal loaded at surface and at grain boundary and a honeycomb noble metal catalyst, respectively, wherein the noble metal is dispersed at the grain boundary and surface of alumina and/or a rare earth manganese-zirconium composite oxide to form a multiphase interface. The multiphase interface has a larger steric hindrance and a stronger anchoring effect, which can inhibit the migration, agglomeration, and growth of the noble metal at high temperatures, increase the high-temperature stability and catalytic performance of the noble metal, and reduce the usage of the noble metal. The multiphase interface also exhibits a synergistic catalytic effect, which can reduce the activation energy of lattice oxygen and increase the quantity of active oxygen, thereby enhancing the low-temperature catalytic activity for NO oxidation.

The examples of the present invention also provide use of the catalyst with noble metal loaded at surface and at grain boundary and the honeycomb noble metal catalyst described above in the fields of vehicle exhaust purification, industrial organic exhaust treatment, catalytic combustion of natural gas, petrochemicals, hydrogen energy, and batteries. The catalyst with noble metal loaded at surface and at grain boundary and the honeycomb noble metal catalyst provided by the examples of the present invention have superior low-temperature catalytic activity for NO oxidation and better high-temperature stability, and thus can satisfy the application requirements in relevant various fields.

The present invention will be further described in below with reference to specific examples.

**Comparative Example 1**

A certain volume of platinum nitrate liquid salt was weighed according to a Pt loading amount of 0.2 wt% and mixed well with solid powders of the rare earth manganese-zirconium composite oxide $Ce_{0.10}Mn_{0.05}Y_{0.05}Zr_{0.80}O_2$. The resulting mixture was dried at 120 °C for 10 hours, and then subjected to calcination under air atmosphere at 700 °C for 3 hours, to give the catalyst $Pt(0.2wt\%)/Ce_{0.10}Mn_{0.05}Y_{0.05}Zr_{0.80}O_2$. The above catalyst was tested for catalytic performance, and the resulting maximum NO conversion was 63.52%, the temperature at which the maximum NO conversion occurred was 326 °C. After 650 °C/10% $H_2O$/100 h hydrothermal aging, the maximum NO conversion of the catalyst was 49.38%.

**Comparative Example 2**

A certain volume of platinum nitrate liquid salt was weighed according to a Pt loading amount of 0.2 wt% and mixed well with solid powders of the rare earth manganese-zirconium composite oxide $Ce_{0.20}Mn_{0.05}Y_{0.05}Zr_{0.70}O_{1.99}$. The resulting mixture was dried at 100 °C for 6 hours, and then subjected to calcination under air atmosphere at 600 °C for 6 hours, to give the catalyst $Pt(0.2wt\% )/Ce_{0.20}Mn_{0.05}Pr_{0.05}Zr_{0.70}O_{1.99}$. The above catalyst was tested for catalytic performance, and the resulting maximum NO conversion was 64.06%, the temperature at which the maximum NO conversion occurred was 324 °C. After 650 °C/10% $H_2O$/100 h hydrothermal aging, the maximum NO conversion of the catalyst was 50.37%.

**Comparative Example 3**

A certain volume of platinum nitrate liquid salt was weighed according to a Pt loading amount of 1.1 g/L, to which was added $Al_2O_3$, $Ce_{0.30}Mn_{0.25}La_{0.05}Nd_{0.05}W_{0.05}Zr_{0.30}O_{1.99}$, an acidity regulator and water and mixed well before adding an adhesive and mixing well, to prepare a slurry. The slurry was coated onto a cordierite ceramic honeycomb carrier. The coated carrier was dried at 80 °C for 8 hours and subjected to calcination under $H_2$ reducing atmosphere at 600 °C for 3 hours to give the honeycomb noble metal catalyst $Pt(1.1g/L)/Ce_{0.30}Mn_{0.25}La_{0.05}Nd_{0.05}W_{0.05}Zr_{0.30}O_{1.99}$-$Al_2O_3$. The above catalyst was tested for catalytic performance, and the resulting maximum NO conversion was 65.54%, the temperature at which the maximum NO conversion occurred was 330 °C. After 650 °C/10% $H_2O$/100 h hydrothermal aging, the maximum NO conversion of the catalyst was 50.93%.

**Example 1**

A certain volume of platinum nitrate liquid salt was weighed according to a Pt loading amount of 0.2 wt% and mixed well with solid powders of the rare earth manganese-zirconium composite oxide $Ce_{0.10}Mn_{0.05}Y_{0.05}Zr_{0.80}O_2$. The resulting mixture was dried at 120 °C for 10 hours, and subjected to heat treatment at 500 °C for 3 hours and then calcination under $H_2$ reducing atmosphere at 700 °C for 3 hours, to give the catalyst $Pt(0.2wt\%)/Ce_{0.10}Mn_{0.05}Y_{0.05}Zr_{0.80}O_2$. The noble metal Pt was dispersed at the grain boundary and surface of the rare earth manganese-zirconium composite oxide. The above catalyst was tested for catalytic performance, and the resulting maximum NO conversion was 71.44%, the temperature at which the maximum NO conversion occurred was 283 °C. After 650 °C/10% $H_2O$/100 h hydrothermal aging, the maximum NO conversion of the catalyst was 60.13%.

**Example 2**

A certain volume of platinum nitrate liquid salt was weighed according to a Pt loading amount of 0.2 wt% and mixed well with solid powders of the rare earth manganese-zirconium composite oxide $Ce_{0.20}Mn_{0.05}Pr_{0.05}Zr_{0.70}O_{1.99}$. The resulting mixture was dried at 100 °C for 6 hours, and then subjected to heat treatment at a low temperature of 200°C for 6 hours, another heat treatment at a high temperature of 500 °C for 2 hours, and calcination under $H_2$ reducing atmosphere at 600 °C for 6 hours, to give the catalyst $Pt(0.2wt\%)/Ce_{0.20}Mn_{0.05}Pr_{0.05}Zr_{0.70}O_{1.99}$. The noble metal Pt was dispersed at the grain boundary and surface of the rare earth manganese-zirconium composite oxide. The above catalyst was tested for catalytic performance, and the resulting maximum NO conversion was 75.52%, the temperature at which the maximum NO conversion occurred was 273 °C. After 650 °C/10% $H_2O$/100 h hydrothermal aging, the maximum NO conversion of the catalyst was 65.31%.

**Example 3**

A certain volume of platinum nitrate liquid salt was weighed according to a Pt loading amount of 0.2 wt% and mixed well with solid powders of the rare earth manganese--zirconium composite oxide $Ce_{0.20}Mn_{0.10}Yb_{0.10}Zr_{0.60}O_{1.99}$. The resulting mixture was dried at 110 °C for 12 hours, and then subjected to heat treatment at 530 °C for 3 hours, and calcination under $H_2$ reducing atmosphere at 650 °C for 3 hours, to give the catalyst $Pt(0.2wt\%)/Ce_{0.20}Mn_{0.10}Yb_{0.10}Zr_{0.60}O_{1.99}$. The noble metal Pt was dispersed at the grain boundary and surface of the rare earth manganese-zirconium composite oxide. The above catalyst was tested for catalytic performance, and the resulting maximum NO conversion was 73.54%, the temperature at which the maximum NO conversion occurred was 277 °C. After 650 °C/10% $H_2O$/100 h hydrothermal aging, the maximum NO conversion of the catalyst was 63.54%.

**Example 4**

A certain volume of platinum nitrate liquid salt was weighed according to a Pt loading amount of 0.2 wt% and mixed well with solid powders of the rare earth manganese-zirconium composite oxide $Ce_{0.20}Mn_{0.10}Gd_{0.20}Zr_{0.50}O_{1.99}$. The resulting mixture was dried at 90 °C for 23 hours, and then subjected to heat treatment at 530 °C for 3 hours, and calcination at 650 °C for 3 hours, to give the catalyst $Pt(0.2wt\%)/Ce_{0.20}Mn_{0.10}Gd_{0.20}Zr_{0.50}O_{1.99}$. The noble metal Pt was dispersed at the grain boundary and surface of the rare earth manganese-zirconium composite oxide. The above catalyst was tested for catalytic performance, and the resulting maximum NO conversion was 74.78%, the temperature at which the maximum NO conversion occurred was 273 °C. After 650 °C/10% $H_2O$/100 h hydrothermal aging, the maximum NO conversion of the catalyst was 64.43%.

**Example 5**

A certain volume of chloroplatinic acid solution was weighed according to a Pt loading amount of 0.3 wt% and mixed well with solid powders of the rare earth manganese--zirconium composite oxide $Ce_{0.20}Mn_{0.15}Eu_{0.15}Zr_{0.50}O_{1.99}$. The resulting mixture was washed and dried at 100 °C for 13 hours, and then subjected to heat treatment at 530 °C for 3 hours, and calcination under $H_2$ reducing atmosphere at 650 °C for 3 hours, to give the catalyst $Pt(0.3wt\%)/Ce_{0.20}Mn_{0.15}Eu_{0.15}Zr_{0.50}O_{1.99}$. The noble metal Pt was dispersed at the grain boundary and surface of the rare earth manganese-zirconium composite oxide. The above catalyst was tested for catalytic performance, and the resulting maximum NO conversion was 76.63%, the temperature at which the maximum NO conversion occurred was 267 °C. After 650 °C/10% $H_2O$/100 h hydrothermal aging, the maximum NO conversion of the catalyst was 65.16%.

**Example 6**

A certain volume of platinum nitrate liquid salt was weighed according to a Pt loading amount of 0.4 wt% and mixed well with solid powders of the rare earth manganese--zirconium composite oxide $Ce_{0.20}Mn_{0.15}La_{0.15}Zr_{0.50}O_{1.99}$. The resulting mixture was dried at 80 °C for 9 hours, and then subjected to heat treatment at a low temperature of 300 °C for 5 hours, heat treatment at a high temperature of 550 °C for 3 hours, and calcination under $H_2$ reducing atmosphere at 650 °C for 5 hours, to give the catalyst $Pt(0.4wt\%)/Cc_{0.20}Mn_{0.15}La_{0.15}Zr_{0.50}O_{1.99}$. The noble metal Pt was dispersed at the grain boundary and surface of the rare earth manganese-zirconium composite oxide. The above catalyst was tested for catalytic performance, and the resulting maximum NO conversion was 77.33%, the temperature at which the maximum NO conversion occurred was 261 °C. After 650 °C/10% $H_2O$/100 h hydrothermal aging, the maximum NO conversion of the catalyst was 66.46%.

**Example 7**

A certain volume of platinum nitrate liquid salt was weighed according to a Pt loading amount of 0.4 wt% and mixed well with solid powders of the rare earth manganese-zirconium composite oxide $Ce_{0.20}Mn_{0.15}Nd_{0.15}Zr_{0.50}O_{1.99}$. The resulting mixture was dried at 110 °C for 15 hours, and then subjected to heat treatment at 550 °C for 5 hours, and calcination under $H_2$ reducing atmosphere at 650 °C for 5 hours, to give the catalyst $Pt(0.4wt\%)/Ce_{0.20}Mn_{0.15}Nd_{0.15}Zr_{0.50}O_{1.99}$. The noble metal Pt was dispersed at the grain boundary and surface of the rare earth manganese-zirconium composite oxide. The above catalyst was tested for catalytic performance, and the resulting maximum NO conversion was 77.34%, the temperature at which the maximum NO conversion occurred was 266 °C. After 650 °C/10% $H_2O$/100 h hydrothermal aging, the maximum NO conversion of the catalyst was 66.68%.

**Example 8**

A certain volume of platinum nitrate liquid salt was weighed according to a Pt loading amount of 0.4 wt% and mixed well with solid powders of the rare earth manganese-zirconium composite oxide $Ce_{0.20}Mn_{0.15}La_{0.15}Zr_{0.50}O_{1.99}$. The resulting mixture was dried at 90 °C for 10 hours, and then subjected to heat treatment at 550 °C for 5 hours, and calcination under $H_2$ reducing atmosphere at 650 °C for 5 hours, to give the catalyst $Pt(0.4wt\%)/Ce_{0.20}Mn_{0.15}La_{0.15}Zr_{0.50}O_{1.99}$. The noble metal Pt was dispersed at the grain boundary and surface of the rare earth manganese-zirconium composite oxide. The above catalyst was tested for catalytic performance, and the resulting maximum NO conversion was 76.91%, the temperature at which the maximum NO conversion occurred was 267 °C. After 650 °C/10% $H_2O$/100 h hydrothermal aging, the maximum NO conversion of the catalyst was 65.33%.

**Example 9**

A certain volume of palladium nitrate liquid salt was weighed according to a Pd loading amount of 0.4 wt% and mixed well with solid powders of the rare earth manganese-zirconium composite oxide $Ce_{0.20}Mn_{0.20}La_{0.05}Y_{0.05}Zr_{0.50}O_{1.98}N_{0.02}$. The resulting mixture was dried at 100 °C for 24 hours, and then subjected to heat treatment at 550 °C for 2 hours, and calcination under $H_2$ reducing atmosphere at 650 °C for 5 hours, to give the catalyst $Pd(0.4wt\%)/Ce_{0.20}Mn_{0.20}La_{0.05}Y_{0.05}Zr_{0.50}O_{1.98}N_{0.02}$. The noble metal Pd was dispersed at the grain boundary and surface of the rare earth manganese-zirconium composite oxide. The above catalyst was tested for catalytic performance, and the resulting maximum NO conversion was 74.74%, the temperature at which the maximum conversion occurred was 270 °C. After 650 °C/10% $H_2O$/100 h hydrothermal aging, the maximum NO conversion of the catalyst was 63.16%.

**Example 10**

A certain volume of platinum acetate liquid salt was weighed according to a Pt loading amount of 0.4 wt% and mixed well with solid powders of the rare earth manganese-zirconium composite oxide $Ce_{0.20}Mn_{0.20}La_{0.05}Y_{0.05}Zr_{0.50}O_{1.98}N_{0.02}$. The resulting mixture was dried at 90 °C for 20 hours, and then subjected to heat treatment at 550 °C for 6 hours, and calcination under $H_2$ reducing atmosphere at 650 °C for 5 hours, to give the catalyst $Pt(0.4wt\%)/Ce_{0.20}Mn_{0.20}La_{0.05}Y_{0.05}Zr_{0.50}O_{1.98}N_{0.02}$. The noble metal Pt was dispersed at the grain boundary and surface of the rare earth manganese-zirconium composite oxide. The above catalyst was tested for catalytic performance, and the resulting maximum NO conversion was 77.78%, the temperature at which the maximum NO conversion occurred was 266 °C. After 650 °C/10% $H_2O$/100 h hydrothermal aging, the maximum NO conversion of the catalyst was 64.37%.

**Example 11**

Certain volumes of liquid salts of platinum nitrate and palladium nitrate were weighed according to a $Pt_{0.5}Pd_{0.5}$ loading amount of 0.4 wt% and mixed well with solid powders of the rare earth manganese-zirconium composite oxide $Ce_{0.20}Mn_{0.20}La_{0.05}Y_{0.05}Zr_{0.50}O_{1.90}N_{0.10}$. The resulting mixture was dried at 100 °C for 12 hours, and then subjected to heat treatment at 450 °C for 6 hours, and calcination under $H_2$ reducing atmosphere at 600 °C for 6 hours, to give the catalyst $Pt_{0.5}Pd_{0.5}(0.4wt\%)/Ce_{0.20}Mn_{0.20}La_{0.05}Y_{0.05}Zr_{0.50}O_{1.90}N_{0.10}$. The noble metals Pt and Pd were dispersed at the grain boundary and surface of the rare earth manganese-zirconium composite oxide. The above catalyst was tested for catalytic performance, and the resulting maximum NO conversion was 78.13%, the temperature at which the maximum conversion occurred was 261 °C. After 650 °C/10% $H_2O$/100 h hydrothermal aging, the maximum NO conversion of the catalyst was 68.49%.

**Example 12**

Certain volumes of liquid salts of platinum nitrate and palladium nitrate were weighed according to a $Pt_{0.67}Pd_{0.33}$ loading amount of 0.4 wt% and mixed well with solid powders of the rare earth manganese-zirconium composite oxide $Ce_{0.20}Mn_{0.20}La_{0.05}Y_{0.05}Zr_{0.50}O_{1.98}N_{0.02}$. The resulting mixture was dried at 100 °C for 20 hours, and then subjected to heat treatment at 450 °C for 6 hours, and calcination under $H_2$ reducing atmosphere at 600 °C for 8 hours, to give the catalyst $Pt_{0.67}Pd_{0.33}(0.4wt\%)/Ce_{0.20}Mn_{0.20}La_{0.05}Y_{0.05}Zr_{0.50}O_{1.98}N_{0.02}$. The noble metals Pt and Pd were dispersed at the grain boundary and surface of the rare earth manganese-zirconium composite oxide. The above catalyst was tested for catalytic performance, and the resulting maximum NO conversion was 80.30%, the temperature at which the maximum conversion occurred was 242 °C. After 650 °C/10% $H_2O$/100 h hydrothermal aging, the maximum NO conversion of the catalyst was 73.11%.

**Example 13**

Certain volumes of liquid salts of platinum nitrate and palladium nitrate were weighed according to a $Pt_{0.67}Pd_{0.33}$ loading amount of 0.4 wt% and mixed well with solid powders of the rare earth manganese-zirconium composite oxide $Ce_{0.20}Mn_{0.20}La_{0.05}Y_{0.05}Zr_{0.50}O_{1.98}N_{0.02}$ with gradient distribution of elements. The resulting mixture was dried at 100 °C for 20 hours, and then subjected to heat treatment at 500 °C for 8 hours, and calcination under $H_2$ reducing atmosphere at 550 °C for 5 hours, to give the catalyst $Pt_{0.67}Pd_{0.33}(0.4wt\%)/Ce_{0.20}Mn_{0.20}La_{0.05}Y_{0.05}Zr_{0.50}O_{1.98}N_{0.02}$. The noble metals Pt and Pd were dispersed at the grain boundary and surface of the rare earth manganese-zirconium composite oxide. The above catalyst was tested for catalytic performance, and the resulting maximum NO conversion was 81.43%, the temperature at which the maximum NO conversion occurred was 236 °C. After 650 °C/10% $H_2O$/100 h hydrothermal aging, the maximum NO conversion of the catalyst was 76.66%.

**Example 14**

Certain volumes of liquid salts of platinum nitrate and palladium nitrate were weighed according to a $Pt_{0.75}Pd_{0.25}$ loading amount of 0.4 wt% and mixed well with solid powders of the rare earth manganese-zirconium composite oxide $Ce_{0.20}Mn_{0.20}La_{0.05}Nd_{0.05}Zr_{0.50}O_{1.98}P_{0.02}$. The resulting mixture was dried at 90 °C for 24 hours, and then subjected to heat treatment at 450 °C for 6 hours, and calcination under $H_2$ reducing atmosphere at 600 °C for 8 hours, to give the catalyst $Pt_{0.75}Pd_{0.25}(0.4wt\%)/Ce_{0.20}Mn_{0.20}La_{0.05}Nd_{0.05}Zr_{0.50}O_{1.98}P_{0.02}$. The noble metals Pt and Pd were dispersed at the grain boundary and surface of the rare earth manganese-zirconium composite oxide. The above catalyst was tested for catalytic performance, and the resulting maximum NO conversion was 79.38%, the temperature at which the maximum NO conversion occurred was 253 °C. After 650 °C/10% $H_2O$/100 h hydrothermal aging, the maximum NO conversion of the catalyst was 70.16%.

**Example 15**

Certain volumes of liquid salts of platinum nitrate and palladium nitrate were weighed according to a $Pt_{0.91}Pd_{0.09}$ loading amount of 0.4 wt% and mixed well with solid powders of the rare earth manganese-zirconium composite oxide $Ce_{0.14}Mn_{0.16}La_{0.03}Nd_{0.04}Y_{0.05}Zr_{0.58}O_2$. The resulting mixture was dried at 120 °C for 6 hours, and then subjected to heat treatment at 450 °C for 6 hours, and calcination under $H_2$ reducing atmosphere at 600 °C for 8 hours, to give the catalyst $Pt_{0.91}Pd_{0.09}(0.4wt\%)/Ce_{0.14}Mn_{0.16}La_{0.03}Nd_{0.04}Y_{0.05}Zr_{0.58}O_2$. The noble metals Pt and Pd were dispersed at the grain boundary and surface of the rare earth manganese-zirconium composite oxide. The above catalyst was tested for catalytic performance, and the resulting maximum NO conversion was 80.63%, the temperature at which the maximum NO conversion occurred was 241 °C. After 650 °C/10% $H_2O$/100 h hydrothermal aging, the maximum NO conversion of the catalyst was 74.36%.

**Example 16**

Certain volumes of liquid salts of platinum nitrate and palladium nitrate were weighed according to a $Pt_{0.83}Pd_{0.17}$ loading amount of 0.4 wt% and mixed well with solid powders of the rare earth manganese-zirconium composite oxide $Ce_{0.20}Mn_{0.20}La_{0.05}Y_{0.05}Zr_{0.50}O_{1.98}F_{0.02}$. The resulting mixture was dried at 80 °C for 24 hours, and then subjected to heat treatment at 450 °C for 6 hours, and calcination under $H_2$ reducing atmosphere at 600 °C for 8 hours, to give the catalyst $Pt_{0.83}Pd_{0.17}(0.4wt\%)/Ce_{0.20}Mn_{0.20}La_{0.05}Y_{0.05}Zr_{0.50}O_{1.98}F_{0.02}$. The noble metals Pt and Pd were dispersed at the grain boundary and surface of the rare earth manganese-zirconium composite oxide. The above catalyst was tested for catalytic performance, and the resulting maximum NO conversion was 79.43%, the temperature at which the maximum NO conversion occurred was 246 °C. After 650 °C/10% $H_2O$/100 h hydrothermal aging, the maximum NO conversion of the catalyst was 71.67%.

**Example 17**

Certain volumes of liquid salts of platinum nitrate and palladium nitrate were weighed according to a $Pt_{0.91}Pd_{0.09}$ loading amount of 0.4 wt% and mixed well with solid powders of the rare earth manganese-zirconium composite oxide $Ce_{0.20}Mn_{0.20}La_{0.02}Nd_{0.03}Y_{0.03}Cu_{0.02}Zr_{0.50}O_{1.98}$. The resulting mixture was dried at 150 °C for 10 hours, and then subjected to heat treatment at 450 °C for 6 hours, and calcination under $H_2$ reducing atmosphere at 600 °C for 8 hours, to give the catalyst $Pt_{0.91}Pd_{0.09}(0.4wt\%)/Ce_{0.20}Mn_{0.20}La_{00.2}Nd_{0.03}Y_{0.03}Cu_{0.02}Zr_{0.50}O_{1.98}$. The noble metals Pt and Pd were dispersed at the grain boundary and surface of the rare earth manganese-zirconium composite oxide. The above catalyst was tested for catalytic performance, and the resulting maximum NO conversion was 82.39%, the temperature at which the maximum NO conversion occurred was 236 °C. After 650 °C/10% $H_2O$/100 h hydrothermal aging, the maximum NO conversion of the catalyst was 76.88%.

**Example 18**

Certain volumes of liquid salts of platinum nitrate and palladium nitrate were weighed according to a $Pt_{0.91}Pd_{0.09}$ loading amount of 0.4 wt% and mixed well with solid powders of the rare earth manganese-zirconium composite oxide $Ce_{0.14}Mn_{0.16}La_{0.03}Nd_{0.04}Y_{0.05}Zr_{0.58}O_2$ having a core-shell structure. The resulting mixture was dried at 110 °C for 7 hours, and then subjected to heat treatment at 460 °C for 5 hours, and calcination under $H_2$ reducing atmosphere at 550 °C for 5 hours, to give the catalyst $Pt_{0.91}Pd_{0.09}(0.4wt\%)/Ce_{0.14}Mn_{0.16}La_{0.03}Nd_{0.04}Y_{0.05}Zr_{0.58}O_2$. The noble metals Pt and Pd were dispersed at the grain boundary and surface of the rare earth manganese-zirconium composite oxide. The above catalyst was tested for catalytic performance, and the resulting maximum NO conversion was 81.98%, the temperature at which the maximum NO conversion occurred was 234 °C. After 650 °C/10% $H_2O$/100 h hydrothermal aging, the maximum NO conversion of the catalyst was 77.33%.

**Example 19**

A certain amount of catalyst $Pt_{0.91}Pd_{0.09}(0.4wt\%)/Ce_{0.20}Mn_{0.20}La_{0.02}Nd_{0.03}Y_{0.03}Cu_{0.02}Zr_{0.50}O_{1.98}$ prepared in Example 15 was taken and prepared to a slurry by mixing with an adhesive, an acidity regulator, and water. The slurry was coated onto a cordierite ceramic honeycomb carrier. The coated carrier was dried at 100 °C for 4 hours, and then subjected to calcination under air atmosphere at 550 °C for 5 hours to give the honeycomb noble metal catalyst $Pt_{0.91}Pd_{0.09}(0.35g/L)/Ce_{0.20}Mn_{0.20}La_{0.02}Nd_{0.03}Y_{0.03}Cu_{0.02}Zr_{0.50}O_{1.99}$ with the noble metals Pt and Pd dispersed at the grain boundary and surface of the rare-earth manganese-zirconium composite oxide. The above catalyst was tested for catalytic performance, and the resulting maximum NO conversion was 83.86%, the temperature at which the maximum NO conversion occurred was 230 °C. After 650 °C/10% $H_2O$/100 h hydrothermal aging, the maximum NO conversion of the catalyst was 75.1%.

**Example 20**

A certain volume of platinum nitrate liquid salt was weighed according to a Pt loading amount of 0.6 wt% and mixed well with solid powders of the rare earth manganese-zirconium composite oxide

$Ce_{0.20}Mn_{0.20}La_{0.02}Nd_{0.03}Sm_{0.03}Y_{0.02}Zr_{0.50}O_{1.98}$. The resulting mixture was dried at 60 °C for 32 hours, and then subjected to heat treatment at 400 °C for 9 hours, and calcination under $H_2$ reducing atmosphere at 550 °C for 9 hours, to give the catalyst $Pt(0.6wt\%)/Ce_{0.20}Mn_{0.20}La_{0.02}Nd_{0.03}Sm_{0.03}Y_{0.02}Zr_{0.50}O_{1.98}$. The noble metal Pt was dispersed at the grain boundary and surface of the rare earth manganese-zirconium composite oxide. The above catalyst was tested for catalytic performance, and the resulting maximum NO conversion was 80.36%, the temperature at which the maximum NO conversion occurred was 245 °C. After 650 °C/10% $H_2O$/100 h hydrothermal aging, the maximum NO conversion of the catalyst was 70.43%.

**Example 21**

A certain volume of platinum nitrate liquid salt was weighed according to a Pt loading amount of 0.8 wt% and mixed well with solid powders of the rare earth manganese-zirconium composite oxide $Ce_{0.20}Mn_{0.30}La_{0.02}Co_{0.03}Y_{0.05}Zr_{0.40}O_{1.98}$. The resulting mixture was dried at 100 °C for 6 hours, and then subjected to heat treatment at 400 °C for 9 hours, and calcination under $H_2$ reducing atmosphere at 550 °C for 12 hours, to give the catalyst $Pt(0.8wt\%)/Ce_{0.20}Mn_{0.30}La_{0.02}Co_{0.03}Y_{0.05}Zr_{0.40}O_{1.98}$. The noble metal Pt was dispersed at the grain boundary and surface of the rare earth manganese-zirconium composite oxide. The above catalyst was tested for catalytic performance, and the resulting maximum NO conversion was 78.36%, the temperature at which the maximum NO conversion occurred was 246 °C. After 650 °C/10% $H_2O$/100 h hydrothermal aging, the maximum NO conversion of the catalyst was 68.41%.

**Example 22**

A certain volume of ruthenium nitrate liquid salt was weighed according to a Ru loading amount of 0.1 wt% and mixed well with solid powders of the rare earth manganese-zirconium composite oxide $Ce_{0.40}Mn_{0.05}La_{0.05}Sr_{0.05}Sc_{0.05}Zr_{0.40}O_{1.98}$. The resulting mixture was dried at 80 °C for 30 hours, and then subjected to heat treatment at 700 °C for 1 hour, and calcination under CO reducing atmosphere at 750 °C for 9 hours, to give the catalyst $Ru(0.1wt\%)/Ce_{0.40}Mn_{0.05}La_{0.05}Sr_{0.05}Sc_{0.05}Zr_{0.40}O_{1.98}$. The noble metal Ru was dispersed at the grain boundary and surface of the rare earth manganese-zirconium composite oxide. The above catalyst was tested for catalytic performance, and the resulting maximum NO conversion was 69.16%, the temperature at which the maximum NO conversion occurred was 276 °C. After 650 °C/10% $H_2O$/100 h hydrothermal aging, the maximum NO conversion of the catalyst was 59.38%.

**Example 23**

A certain volume of ruthenium nitrate liquid salt was weighed according to a Ru loading amount of 0.1 wt% and mixed well with solid powders of the rare earth manganese-zirconium composite oxide $Ce_{0.40}Mn_{0.05}La_{0.05}Sr_{0.05}Sc_{0.05}Zr_{0.40}O_{1.98}$. The resulting mixture was dried at 90 °C for 15 hours, and then subjected to heat treatment at a low temperature of 300 °C for 4 hours, another heat treatment at a high temperature of 700 °C for 3 hours, and calcination under CO reducing atmosphere at 750 °C for 6 hours, to give the catalyst $Ru(0.1wt\%)/Ce_{0.40}Mn_{0.05}La_{0.05}Sr_{0.05}Sc_{0.05}Zr_{0.40}O_{1.98}$. The noble metal Ru was dispersed at the grain boundary and surface of the rare earth manganese-zirconium composite oxide. The above catalyst was tested for catalytic performance, and the resulting maximum NO conversion was 70.02%, the temperature at which the maximum NO conversion occurred was 271 °C. After 650 °C/10% $H_2O$/100 h hydrothermal aging, the maximum NO conversion of the catalyst was 60.16%.

**Example 24**

A certain volume of iridium nitrate liquid salt was weighed according to an Ir loading amount of 0.1 wt% and mixed well with solid powders of $Ce_{0.40}Mn_{0.05}La_{0.05}Ba_{0.05}Al_{0.05}Zr_{0.40}O_{1.98}$. The resulting mixture was dried at 120 °C for 5 hours, and then subjected to heat treatment at 600 °C for 9 hours, and calcination under $H_2$ reducing atmosphere at 750 °C for 6 hours, to give the catalyst $Ir(0.1wt\%)/Ce_{0.40}Mn_{0.05}La_{0.05}Ba_{0.05}Al_{0.05}Zr_{0.40}O_{1.98}$. The noble metal Ir was dispersed at the grain boundary and surface of the rare earth manganese-zirconium composite oxide. The above catalyst was tested for catalytic performance, and the resulting maximum NO conversion was 68.11 %, the temperature at which the maximum NO conversion occurred was 279 °C. After 650 °C/10% $H_2O$/100 h hydrothermal aging, the maximum NO conversion of the catalyst was 56.9%.

**Example 25**

A certain volume of osmium acetate liquid salt was weighed according to an Os loading amount of 0.01 wt% and mixed well with solid powders of $Ce_{0.40}Mn_{0.05}La_{0.05}Hf_{0.05}Ni_{0.05}Zr_{0.40}O_{1.98}$. The resulting mixture was dried at 160 °C for 1 hour, and then subjected to heat treatment at 750 °C for 0.5 hours, and calcination under $H_2$ reducing atmosphere at 800 °C for 1 hour, to give the catalyst $Os(0.01wt\%)/Ce_{0.40}Mn_{0.05}La_{0.05}Hf_{0.05}Ni_{0.05}Zr_{0.40}O_{1.98}$. The noble metal Os was dispersed at the grain boundary and surface of the rare earth manganese-zirconium composite oxide. The above catalyst was tested for catalytic performance, and the resulting maximum NO conversion was 66.39%, the temperature at which the maximum NO conversion occurred was 286 °C. After 650 °C/10% $H_2O$/100 h hydrothermal aging, the maximum NO conversion of the catalyst was 53.83%.

**Example 26**

A certain volume of platinum nitrate liquid salt was weighed according to a Pt loading amount of 0.8 wt% and mixed well with solid powders of 30 g of $Ce_{0.20}Mn_{0.30}La_{0.05}Y_{0.05}Zr_{0.40}O_{1.98}$ and 70 g of alumina. The resulting mixture was dried at 90 °C for 6 hours, and then subjected to heat treatment at 400 °C for 9 hours, and calcination under $H_2$ reducing atmosphere at 550 °C for 9 hours, to give the catalyst $Pt(0.8wt\%)/Ce_{0.20}Mn_{0.30}La_{0.05}Y_{0.05}Zr_{0.40}O_{1.98}-Al_2O_3$. The noble metal Pt was dispersed at the grain boundary and surface of the rare earth manganese-zirconium composite oxide and alumina. The above catalyst was tested for catalytic performance, and the resulting maximum NO conversion was 79.93%, the temperature at which the maximum NO conversion occurred was 243 °C. After 650 °C/10% $H_2O$/100 h hydrothermal aging, the maximum NO conversion of the catalyst was 70.53%.

**Example 27**

A certain amount of catalyst $Pt(0.8wt\%)/Ce_{0.20}Mn_{0.30}La_{0.05}Y_{0.05}Zr_{0.40}O_{1.98}-Al_2O_3$ prepared in Example 22 was taken to prepare a slurry by mixing with an adhesive, an acidity regulator, water, and the like. The prepared slurry was coated onto a cordierite ceramic honeycomb carrier. The coated honeycomb carrier was dried at 100 °C for 4 hours, and then subjected to calcination under air atmosphere at 600 °C for 1 hour to give the honeycomb noble metal catalyst $Pt(0.5g/L)/Ce_{0.20}Mn_{0.30}La_{0.05}Y_{0.05}Zr_{0.40}O_{1.98}-Al_2O_3$ with the noble metal Pt dispersed at the grain boundary and surface of the rare-earth manganese-zirconium composite oxide and alumina. The above catalyst was tested for catalytic performance, and the resulting maximum NO conversion was 81.69%, the temperature at which the maximum NO conversion occurred was 241 °C. After 650 °C/10% $H_2O$/100 h hydrothermal aging, the maximum NO conversion of the catalyst was 73.18%.

**Example 28**

A certain volume of platinum nitrate liquid salt was weighed according to a Pt loading amount of 1.0 wt% and mixed well with solid powders of 40 g of $Ce_{0.30}Mn_{0.25}La_{0.05}Nd_{0.05}W_{0.05}Zr_{0.30}O_{1.98}$ and 60 g of alumina. The resulting mixture was dried at 130 °C for 2 hours, and then subjected to heat treatment at 450 °C for 12 hours, and calcination under $H_2$ reducing atmosphere at 700 °C for 7 hours, to give the catalyst $Pt(1.0wt\%)/Ce_{0.30}Mn_{0.25}La_{0.05}Nd_{0.05}W_{0.05}Zr_{0.30}O_{1.98}-Al_2O_3$. The noble metal Pt was dispersed at the grain boundary and surface of the rare earth manganese-zirconium composite oxide and alumina. The above catalyst was tested for catalytic performance, and the resulting maximum NO conversion was 78.61%, the temperature at which the maximum NO conversion occurred was 253 °C. After 650 °C/10% $H_2O$/100 h hydrothermal aging, the maximum NO conversion of the catalyst was 66.84%.

**Example 29**

A certain volume of platinum nitrate liquid salt was weighed according to a Pt loading amount of 1.0 wt% and mixed well with solid powders of 50 g of $Ce_{0.30}Mn_{0.30}La_{0.05}Cu_{0.05}Zr_{0.30}O_{1.98}$ and 50 g of alumina. The resulting mixture was dried at 140 °C for 5 hours, and then subjected to heat treatment at 450 °C for 12 hours, and calcination under $H_2$ reducing atmosphere at 700 °C for 8 hours, to give the catalyst $Pt(1.0wt\%)/Ce_{0.30}Mn_{0.30}La_{0.05}Cu_{0.05}Zr_{0.30}O_{1.98}-Al_2O_3$. The noble metal Pt was dispersed at the grain boundary and surface of the rare earth manganese-zirconium composite oxide and alumina. The above catalyst was tested for catalytic performance, and the resulting maximum NO conversion was 77.36%, the temperature at which the maximum NO conversion occurred was 256 °C. After 650 °C/10% $H_2O$/100 h hydrothermal aging, the maximum NO conversion of the catalyst was 65.18%.

**Example 30**

A certain volume of platinum nitrate liquid salt was weighed according to a Pt loading amount of 1.0 wt% and mixed well with solid powders of 60 g of $Ce_{0.30}Mn_{0.10}La_{0.05}Nd_{0.05}W_{0.05}Zr_{0.30}O_{1.98}$ and 40 g of alumina. The resulting mixture was dried at 80 °C for 9 hours, and then subjected to heat treatment at 450 °C for 12 hours, and calcination under $H_2$ reducing atmosphere at 700 °C for 7 hours, to give the catalyst $Pt(1.0wt\%)/Ce_{0.40}Mn_{0.10}La_{0.05}Nd_{0.05}Ti_{0.20}Zr_{0.20}O_{1.98}-Al_2O_3$. The noble metal Pt was dispersed at the grain boundary and surface of the rare earth manganese-zirconium composite oxide and alumina. The above catalyst was tested for catalytic performance, and the resulting maximum NO conversion was 77.7%, the temperature at which the maximum NO conversion occurred was 272 °C. After 650 °C/10% $H_2O$/100 h hydrothermal aging, the maximum NO conversion of the catalyst was 66.79%.

**Example 31**

A certain volume of platinum nitrate liquid salt was weighed according to a Pt loading amount of 2.0 wt% and mixed well with solid powders of 70 g of $Ce_{0.40}Mn_{0.10}La_{0.05}Nd_{0.05}V_{0.20}Zr_{0.20}O_{1.98}$ and 30 g of alumina. The resulting mixture was dried at 200 °C for 1 hour, and then subjected to heat treatment at 600 °C for 6 hours, and calcination under $H_2$ reducing atmosphere at 700 °C for 9 hours, to give the catalyst $Pt(2.0wt\%)/Ce_{0.40}Mn_{0.10}La_{0.05}Nd_{0.05}V_{0.20}Zr_{0.20}O_{1.98}-Al_2O_3$. The noble metal Pt was dispersed at the grain boundary and surface of the rare earth manganese-zirconium composite oxide and alumina. The above catalyst was tested for catalytic performance, and the resulting maximum NO conversion was 78.6%, the temperature at which the maximum NO conversion occurred was 269 °C. After 650 °C/10% $H_2O$/100 h hydrothermal aging, the maximum NO conversion of the catalyst was 67.46%.

**Example 32**

A certain volume of platinum nitrate liquid salt was weighed according to a Pt loading amount of 2.0 wt% and mixed well with solid powders of 30 g of alumina and 70 g of $Ce_{0.40}Mn_{0.10}La_{0.05}Nd_{0.05}V_{0.20}Zr_{0.20}O_{1.98}$. The resulting mixture was dried at 200 °C for 1 hour, and then subjected to heat treatment at a low temperature of 230 °C for 6 hours, and another heat treatment at a high temperature of 630 °C for 4 hours, and calcination under $H_2$ reducing atmosphere at 700 °C for 5 hours, to give the catalyst $Pt(2.0wt\%)/Ce_{0.40}Mn_{0.10}La_{0.05}Nd_{0.05}V_{0.20}Zr_{0.20}O_{1.98}-Al_2O_3$. The noble metal Pt was dispersed at the grain boundary and surface of the rare earth manganese-zirconium composite oxide and alumina. The above catalyst was tested for catalytic performance, and the resulting maximum NO conversion was 79.96%, the temperature at which the maximum NO conversion occurred was 261 °C. After 650 °C/10% $H_2O$/100 h hydrothermal aging, the maximum NO conversion of the catalyst was 68.41%.

**Example 33**

A certain volume of rhodium nitrate liquid salt was weighed according to a Rh loading amount of 0.5 wt% and mixed well with solid powders of 80 g of $Ce_{0.40}Mn_{0.05}La_{0.05}Nd_{0.05}Nb_{0.05}Zr_{0.40}O_{1.98}$ and 20 g of alumina. The resulting mixture was dried at 50 °C for 48 hours, and then subjected to heat treatment at 300 °C for 3 hours, and calcination under $H_2$ reducing atmosphere at 850 °C for 0.5 hours, to give the catalyst $Rh(0.5wt\%)/Ce_{0.40}Mn_{0.05}La_{0.05}Nd_{0.05}Nb_{0.05}Zr_{0.40}O_{1.98}-Al_2O_3$. The noble metal Rh was dispersed at the grain boundary and surface of the rare earth manganese-zirconium composite oxide and alumina. The above catalyst was tested for catalytic performance, and the resulting maximum NO conversion was 73.43%, the temperature at which the maximum NO conversion occurred was 269 °C. After 650 °C/10% $H_2O$/100 h hydrothermal aging, the maximum NO conversion of the catalyst was 61.53%.

**Example 34**

A certain volume of silver citrate liquid salt was weighed according to an Ag loading amount of 0.5 wt% and mixed well with solid powders of 90 g of $Ce_{0.40}Mn_{0.05}La_{0.05}Nd_{0.05}Si_{0.05}Zr_{0.40}O_{1.98}$ and 10 g of alumina. The resulting mixture was dried at 160 °C for 4 hours, and then subjected to heat treatment at 600 °C for 9 hours, and calcination under $H_2$ reducing atmosphere at 750 °C for 6 hours, to give the catalyst $Ag(0.5wt\%)/Ce_{0.40}Mn_{0.05}La_{0.05}Nd_{0.05}Si_{0.05}Zr_{0.40}O_{1.98}-Al_2O_3$. The noble metal Ag was dispersed at the grain boundary and surface of the rare earth manganese-zirconium composite oxide and alumina. The above catalyst was tested for catalytic performance, and the resulting maximum NO conversion was 70.93%, the temperature at which the maximum NO conversion occurred was 270 °C. After 650 °C/10% $H_2O$/100 h hydrothermal aging, the maximum NO conversion of the catalyst was 60.37%.

**Example 35**

A certain volume of gold chloride liquid salt was weighed according to an Au loading amount of 0.5 wt% and mixed well with solid powders of 90 g of $Ce_{0.40}Mn_{0.05}La_{0.05}Nd_{0.05}Fe_{0.05}Zr_{0.40}O_{1.98}$ and 10 g of alumina. The resulting mixture was washed and dried at 100 °C for 8 hours, and then subjected to heat treatment at 200 °C for 24 hours, and calcination under $H_2$ reducing atmosphere at 400 °C for 24 hours, to give the catalyst $Au(0.5wt\% )/Ce_{0.40}Mn_{0.05}La_{0.05}Nd_{0.05}Fe_{0.05}Zr_{0.40}O_{1.98}-Al_2O_3$. The noble metal Au was dispersed at the grain boundary and surface of the rare earth manganese-zirconium composite oxide and alumina. The above catalyst was tested for catalytic performance, and the resulting maximum NO conversion was 71.34%, the temperature at which the maximum NO conversion occurred was 281 °C. After 650 °C/10% $H_2O$/100 h hydrothermal aging, the maximum NO conversion of the catalyst was 60.66%.

**Example 36**

A certain volume of platinum nitrate liquid salt was weighed according to a Pt loading amount of 1.0 wt% and mixed well with alumina solid powders. The resulting mixture was dried at 50 °C for 6 hours, and then subjected to heat treatment at 450 °C for 12 hours, and calcination under $H_2$ reducing atmosphere at 700 °C for 7 hours, to give the catalyst $Pt(1.0wt\% )/Al_2O_3$. The noble metal Pt was dispersed at the grain boundary and surface of alumina. The above catalyst was tested for catalytic performance, and the resulting maximum NO conversion was 70.96%, the temperature at which the maximum NO conversion occurred was 283 °C. After 650 °C/10% $H_2O$/100 h hydrothermal aging, the maximum NO conversion of the catalyst was 60.31%.

**Example 37**

A certain amount of catalyst $Pt(1.0wt\% )/Al_2O_3$ prepared in Example 31 was taken to prepare a slurry by mixing well with an adhesive, an acidity regulator, water, and the like. The prepared slurry was coated onto a cordierite ceramic honeycomb carrier. The coated honeycomb carrier was dried at 110 °C for 5 hours, and then subjected to calcination under air atmosphere at 450 °C for 6 hours to give the honeycomb noble metal catalyst $Pt(0.03g/L )/Al_2O_3$ with the noble metal Pt dispersed at the grain boundary and surface of alumina. The above catalyst was tested for catalytic performance, and the resulting maximum NO conversion was 68.33%, the temperature at which the maximum NO conversion occurred was 279 °C. After 650 °C/10% $H_2O$/100 h hydrothermal aging, the maximum NO conversion of the catalyst was 60.93%.

**Example 38**

A certain volume of platinum nitrate liquid salt was weighed according to a Pt loading amount of 0.2 wt% and mixed well with solid powders of $Ce_{0.20}Mn_{0.15}Y_{0.15}Zr_{0.50}O_{1.99}$. The resulting mixture was dried at 110 °C for 12 hours, and then subjected to heat treatment at 530 °C for 8 hours, and calcination under $H_2$ reducing atmosphere at 650 °C for 3 hours, to give the catalyst $Pt(0.2wt\% )/Ce_{0.20}Mn_{0.15}Y_{0.15}Zr_{0.50}O_{1.99}$. The noble metal Pt was dispersed at the grain boundary and surface of the rare earth manganese-zirconium composite oxide. The above catalyst was tested for catalytic performance, and the resulting maximum NO conversion was 76.49%, the temperature at which the maximum NO conversion occurred was 270 °C. After 650 °C/10% $H_2O$/100 h hydrothermal aging, the maximum NO conversion of the catalyst was 63.31%.

**Example 39**

A certain amount of catalyst $Pt(0.2wt\% )/Ce_{0.20}Mn_{0.15}Y_{0.15}Zr_{0.50}O_{1.99}$ prepared in Example 33 was taken to prepare a slurry by mixing well with an adhesive, an acidity regulator, water, and the like. The prepared slurry was coated onto a cordierite ceramic honeycomb carrier. The coated honeycomb carrier was dried at 130 °C for 6 hours, and then subjected to calcination under air atmosphere at 500 °C for 3 hours to give the honeycomb noble metal catalyst $Pt(0.15g/L )/Ce_{0.20}Mn_{0.15}Y_{0.15}Zr_{0.50}O_{1.99}$, with the noble metal Pt dispersed at the grain boundary and surface of the rare earth manganese-zirconium composite oxide. The above catalyst was tested for catalytic performance, and the resulting maximum NO conversion was 76.43%, the temperature at which the maximum NO conversion occurred was 266 °C. After 650 °C/10% $H_2O$/100 h hydrothermal aging, the maximum NO conversion of the catalyst was 65.13%.

**Example 40**

A certain volume of platinum nitrate liquid salt was weighed according to a Pt loading amount of 1.1 g/L and prepared to a slurry by mixing well with $Ce_{0.20}Mn_{0.20}La_{0.05}Nd_{0.05}W_{0.05}Zr_{0.50}O_{1.98}N_{0.02}$, an acidity regulator and water before mixing well with an adhesive. The slurry was coated onto a cordierite ceramic honeycomb carrier. The coated carrier was dried at 80 °C for 8 hours and then subjected to heat treatment at a low temperature of 310 °C for 8 hours, another heat treatment at a high temperature of 730 °C for 2 hours, and calcination under $H_2$ reducing atmosphere at 800 °C for 3 hours to give the honeycomb noble metal catalyst $Pt(1.1g/L)/Ce_{0.20}Mn_{0.20}La_{0.05}Nd_{0.05}W_{0.05}Zr_{0.50}O_{1.98}N_{0.02}$, with the noble metal Pt dispersed at the grain boundary and surface of the rare earth manganese-zirconium composite oxide. The above catalyst was tested for catalytic performance, and the resulting maximum NO conversion was 77.71%, the temperature at which the maximum NO conversion occurred was 256 °C. After 650 °C/10% $H_2O$/100 h hydrothermal aging, the maximum NO conversion of the catalyst was 66.73%.

## Example 41

A certain volume of platinum nitrate liquid salt was weighed according to a Pt loading amount of 1.1 g/L and prepared to a slurry by adding $Al_2O_3$, $Ce_{0.30}Mn_{0.25}La_{0.05}Nd_{0.05}W_{0.05}Zr_{0.30}O_{1.99}$, an acidity regulator and water and mixed well before adding an adhesive and mixing well. The slurry was coated onto a cordierite ceramic honeycomb carrier. The coated carrier was dried at 80 °C for 8 hours and then subjected to heat treatment at 400 °C for 8 hours and calcination under $H_2$ reducing atmosphere at 600 °C for 3 hours to give the honeycomb noble metal catalyst $Pt(1.1g/L)/Ce_{0.30}Mn_{0.25}La_{0.05}Nd_{0.05}W_{0.05}Zr_{0.30}O_{1.99}$-$Al_2O_3$, with the noble metal Pt dispersed at the grain boundary and surface of the rare earth manganese-zirconium composite oxide and alumina. The above catalyst was tested for catalytic performance, and the resulting maximum NO conversion was 79.17%, the temperature at which the maximum NO conversion occurred was 236 °C. After 650 °C/10% $H_2O$/100 h hydrothermal aging, the maximum NO conversion of the catalyst was 68.37%.

## Example 42

A certain volume of platinum nitrate liquid salt was weighed according to a Pt loading amount of 1.1 g/L and prepared to a slurry by mixing well with $Al_2O_3$, $Ce_{0.30}Mn_{0.25}La_{0.05}Nd_{0.05}Y_{0.05}Zr_{0.30}O_{1.99}$ having gradient distribution of elements, an acidity regulator and water before mixing well an adhesive. The slurry was coated onto a cordierite ceramic honeycomb carrier. The coated carrier was dried at 80 °C for 8 hours and then subjected to heat treatment at 500 °C for 8 hours and calcination under $H_2$ reducing atmosphere at 550 °C for 5 hours to give the honeycomb noble metal catalyst $Pt(1.1g/L)/Ce_{0.30}Mn_{0.25}La_{0.05}Nd_{0.05}Y_{0.05}Zr_{0.30}O_{1.99}$-$Al_2O_3$, with the noble metal Pt dispersed at the grain boundary and surface of the rare earth manganese-zirconium composite oxide and alumina. The above catalyst was tested for catalytic performance, and the resulting maximum NO conversion was 80.11%, the temperature at which the maximum NO conversion occurred was 234 °C. After 650 °C/10% $H_2O$/100 h hydrothermal aging, the maximum NO conversion of the catalyst was 69.83%.

## Example 43

A certain volume of platinum nitrate liquid salt was weighed according to a Pt loading amount of 1.5 g/L and prepared to a slurry by mixing well with $Al_2O_3$, an acidity regulator and water, etc. before mixing well with an adhesive. The slurry was coated onto a cordierite ceramic honeycomb carrier. The coated carrier was dried at 150 °C for 3 hours and then subjected to heat treatment at 500 °C for 6 hours and calcination under $H_2$ reducing atmosphere at 550 °C for 2 hours to give the honeycomb noble metal catalyst $Pt(1.5g/L)/Al_2O_3$, with the noble metal Pt dispersed at the grain boundary and surface of alumina. The above catalyst was tested for catalytic performance, and the resulting maximum NO conversion was 72.36%, the temperature at which the maximum NO conversion occurred was 266 °C. After 650 °C/10% $H_2O$/100 h hydrothermal aging, the maximum NO conversion of the catalyst was 62.11%.

## Example 44

A certain volume of platinum nitrate liquid salt was weighed according to a Pt loading amount of 2.0 g/L and prepared to a slurry by mixing well with $Ce_{0.40}Mn_{0.10}La_{0.05}Nd_{0.05}V_{0.20}Zr_{0.20}O_{1.98}$, an acidity regulator, water, etc. before mixing well with an adhesive. The slurry was coated onto a cordierite ceramic honeycomb carrier. The coated carrier was dried at 100 °C for 4 hours and then subjected to heat treatment at 380 °C for 7 hours and calcination under $H_2$ reducing atmosphere at 500 °C for 4 hours. Then $Al_2O_3$, an adhesive, an acidity regulator and water, etc. were mixed to prepare a slurry. The slurry was coated onto the above calcined cordierite ceramic honeycomb carrier, which was then dried at 90 °C for 3 hours and subjected to calcination at 450°C for 8 hours to give the honeycomb noble metal catalyst $Pt(2.0g/L)/Ce_{0.40}Mn_{0.10}La_{0.05}Nd_{0.05}V_{0.20}Zr_{0.20}O_{1.98}$-$Al_2O_3$, with the noble metal Pt dispersed at the grain boundary and surface of the rare earth manganese-zirconium composite oxide. The above catalyst was tested for catalytic performance, and the resulting maximum NO conversion was 81.19%, the temperature at which the maximum NO conversion occurred was 239 °C. After 650 °C/10% $H_2O$/100 h hydrothermal aging, the maximum NO conversion of the catalyst was 70.19%.

**Example 45**

A certain volume of platinum nitrate liquid salt was weighed according to a Pt loading amount of 1.3 g/L and prepared to a slurry by mixing well with $Al_2O_3$, an acidity regulator, water, etc. before mixing well with an adhesive. The slurry was coated onto a cordierite ceramic honeycomb carrier. The coated carrier was dried at 120 °C for 4 hours and then subjected to heat treatment at 430 °C for 5 hours and calcination under $H_2$ reducing atmosphere at 500 °C for 7 hours. Then $Ce_{0.30}Mn_{0.30}La_{0.05}Cu_{0.05}Zr_{0.30}O_{1.98}$, an adhesive, an acidity regulator and water, etc. were mixed to prepare a slurry. The slurry was coated onto the above calcined cordierite ceramic honeycomb carrier, which was then dried at 90°C for 3 hours and subjected to calcination under air atmosphere at 450°C for 2 hours to give the honeycomb noble metal catalyst $Pt(1.3g/L)/Ce_{0.30}Mn_{0.30}La_{0.05}Cu_{0.05}Zr_{0.30}O_{1.98}$-$Al_2O_3$, with the noble metal Pt dispersed at the grain boundary and surface of alumina. The above catalyst was tested for catalytic performance, and the resulting maximum NO conversion was 80.60%, the temperature at which the maximum NO conversion occurred was 233 °C. After 650 °C/10% $H_2O$/100 h hydrothermal aging, the maximum NO conversion of the catalyst was 69.33%.

**Example 46**

A certain volume of platinum nitrate liquid salt was weighed according to a Pt loading amount of 1.5 g/L and prepared to a slurry by mixing well with $Al_2O_3$, an acidity regulator, water, etc. before mixing well with an adhesive. The slurry was coated onto a cordierite ceramic honeycomb carrier. The coated ca rrier was dried at 90 °C for 3 hours and then subjected to heat treatment at a low temperature of 340 °C for 5 hours, another heat treatment at a high temperature of 560 °C for 3 hours, and calcination under $H_2$ reducing atmosphere at 650 °C for 5 hours. Then $Ce_{0.40}Mn_{0.05}La_{0.05}Nd_{0.05}Fe_{0.05}Zr_{0.40}O_{1.98}$, an adhesive, an acidity regulator and water, etc. were mixed to prepare a slurry. The slurry was coated onto the above calcined cordierite ceramic honeycomb carrier, which was then dried at 100 °C for 5 hours and subjected to calcination under air atmosphere at 510 °C for 2 hours to give the honeycomb noble metal catalyst $Pt(1.5g/L)/Ce_{0.40}Mn_{0.05}La_{0.05}Nd_{0.05}Fe_{0.05}Zr_{0.40}O_{1.98}$-$Al_2O_3$, with the noble metal Pt dispersed at the grain boundary and surface of alumina. The above catalyst was tested for catalytic performance, and the resulting maximum NO conversion was 79.60%, the temperature at which the maximum NO conversion occurred was 243 °C. After 650 °C/10% $H_2O$/100 h hydrothermal aging, the maximum NO conversion of the catalyst was 69.81%.

**Example 47**

A certain volume of platinum nitrate liquid salt was weighed according to a Pt loading amount of 2.0 g/L. Half of the platinum nitrate liquid salt was mixed well with an appropriate amount of $Ce_{0.40}Mn_{0.10}La_{0.05}Nd_{0.05}V_{0.20}Zr_{0.20}O_{1.98}$, an acidity regulator, water, etc. and then mixed well with an adhesive to prepare a coating slurry. The slurry was coated onto a cordierite ceramic honeycomb carrier. The coated carrier was dried at 110 °C for 6 hours and subjected to heat treatment at 500 °C for 6 hours and calcination under $H_2$ reducing atmosphere at 700 °C for 3 hours. The rest half of the platinum nitrate liquid salt was mixed well with an appropriate amount of $Al_2O_3$ powders, an acidity regulator, water, etc. and then mixed well with an adhesive to prepare a coating slurry. The slurry was coated onto the above calcined cordierite ceramic honeycomb carrier. The resulting carrier was dried at 90 °C for 3 hours and subjected to heat treatment at 560 °C for 4 hours and calcination under $H_2$ reducing atmosphere at 500 °C for 7 hours to give the honeycomb noble metal catalyst $Pt(2.0g/L)/Ce_{0.40}Mn_{0.10}La_{0.05}Nd_{0.05}V_{0.20}Zr_{0.20}O_{1.98}$-$Al_2O_3$, with the noble metal Pt dispersed at the grain boundary and surface of the rare earth manganese-zirconium composite oxide and alumina. The above catalyst was tested for catalytic performance, and the resulting maximum NO conversion was 82.96%, the temperature at which the maximum NO conversion occurred was 236 °C. After 650 °C/10% $H_2O$/100 h hydrothermal aging, the maximum NO conversion of the catalyst was 70.16%.

**Example 48**

A certain volume of platinum nitrate liquid salt was weighed according to a Pt loading amount of 1.0 g/L and prepared to a slurry by mixing well with 20 g of $Ce_{0.40}Mn_{0.10}La_{0.05}Nd_{0.05}Pr_{0.20}Zr_{0.20}O_{1.98}$, 70 g of alumina, an acidity regulator, water, etc. before mixing well with an adhesive. The slurry was coated onto a cordierite ceramic honeycomb carrier. The coated carrier was dried at 80 °C for 13 hours and then subjected to heat treatment at 330 °C for 8 hours and calcination under $H_2$ reducing atmosphere at 550 °C for 4 hours. Then 10 g of alumina was weighed and prepared to a slurry by mixing well with an adhesive, an acidity regulator and water, etc. The slurry was coated onto the above calcined cordierite ceramic honeycomb carrier, which was then dried at 90°C for 3 hours and subjected to calcination at 600°C for 1 hour to give the honeycomb noble metal catalyst $Pt(1.0g/L)/Ce_{0.40}Mn_{0.10}La_{0.05}Nd_{0.05}Pr_{0.20}Zr_{0.20}O_{1.98}$-$Al_2O_3$, with the noble metal Pt dispersed at the grain boundary and surface of the rare earth manganese-zirconium composite oxide and alumina. The above catalyst was tested for catalytic performance, and the resulting maximum NO conversion was 79.31%, the temperature at which the maximum NO conversion occurred was 256 °C. After 650 °C/10% $H_2O$/100 h hydrothermal aging, the maximum NO conversion of the catalyst was 68.69%.

**Example 49**

40 g of $Al_2O_3$ was weighed and mixed well with an acidity regulator, an adhesive, and water to prepare a slurry. The prepared slurry was coated onto a cordierite ceramic honeycomb carrier. The coated carrier was dried at 120 °C for 4 hours and then subjected to calcination under air atmosphere at 500 °C for 7 hours. A certain volume of platinum nitrate liquid salt was weighed according to a Pt loading amount of 1.4 g/L and prepared to a slurry by mixing well with 40 g of $Ce_{0.30}Mn_{0.20}La_{0.10}Cu_{0.10}Zr_{0.30}O_{1.98}$, 20 g of $Al_2O_3$, an acidity regulator, water, etc. before mixing well with an adhesive. The resulting slurry was coated onto the above calcined cordierite ceramic honeycomb carrier. The resulting carrier was dried at 90 °C for 3 hours and then subjected to heat treatment at 430 °C for 5 hours and calcination under $H_2$ reducing atmosphere at 550 °C for 3 hours to give the honeycomb noble metal catalyst $Pt(1.4g/L)/Ce_{0.30}Mn_{0.20}La_{0.10}Cu_{0.10}Zr_{0.30}O_{1.98}$-$Al_2O_3$, with the noble metal Pt dispersed at the grain boundary and surface of the rare earth manganese-zirconium composite oxide and alumina. The above catalyst was tested for catalytic performance, and the resulting maximum NO conversion was 79.33%, the temperature at which the maximum NO conversion occurred was 238 °C. After 650 °C/10% $H_2O$/100 h hydrothermal aging, the maximum NO conversion of the catalyst was 68.16%.

**Example 50**

A certain volume of platinum nitrate liquid salt was weighed according to a Pt loading amount of 1.0 g/L and mixed well with 50 g of alumina solid powders, an acidity regulator, an adhesive, water, etc. to prepare a slurry. The prepared slurry was coated onto a cordierite ceramic honeycomb carrier. The coated carrier was dried at 90 °C for 8 hours and then subjected to heat treatment at 460 °C for 5 hours and calcination under $H_2$ reducing atmosphere at 550 °C for 9 hours. 50g of $Ce_{0.14}Mn_{0.16}La_{0.03}Nd_{0.04}Y_{0.05}Zr_{0.58}O_2$ with a core-shell structure was weighed and mixed well with an adhesive, an acidity regulator, water, etc. to prepare a slurry. The prepared slurry was coated onto the above calcined cordierite ceramic honeycomb carrier. The resulting carrier was dried at 80 °C for 8 hours and calcination under $H_2$ reducing atmosphere at 460 °C for 6 hours to give the honeycomb noble metal catalyst $Pt(1.0g/L)/Ce_{0.14}Mn_{0.16}La_{0.03}Nd_{0.04}Y_{0.05}Zr_{0.58}O_2$-$Al_2O_3$. The noble metal Pt was dispersed at the grain boundary and surface of alumina The above catalyst was tested for catalytic performance, and the resulting maximum NO conversion was 81.96%, the temperature at which the maximum NO conversion occurred was 246 °C. After 650 °C/10% $H_2O$/100 h hydrothermal aging, the maximum NO conversion of the catalyst was 70.19%.

**Example 51**

A certain volume of platinum nitrate liquid salt was weighed according to a Pt loading amount of 1.0 wt% and mixed well with 40 g of solid powders of $Ce_{0.20}Mn_{0.25}La_{0.05}Y_{0.05}Fe_{0.05}Zr_{0.40}O_{1.98}$. The resulting mixture was dried at 80 °C for 9 hours, and then subjected to heat treatment at 410 °C for 6 hours, and calcination under $H_2$ reducing atmosphere at 560 °C for 7 hours, to give the catalyst $Pt(1.0wt\%)/Ce_{0.20}Mn_{0.25}La_{0.05}Y_{0.05}Fe_{0.05}Zr_{0.40}O_{1.9}$. The above catalyst was mixed well with an acidity regulator, an adhesive, water, etc. to prepare a slurry. The prepared slurry was coated onto a cordierite ceramic honeycomb carrier. The coated honeycomb carrier was dried at 130 °C for 1 hour and then subjected to calcination under air atmosphere at 400 °C for 6 hours. 60 g of alumina was weighed and mixed well with an adhesive, an acidity regulator, water, etc. to prepare a slurry. The slurry was coated onto the calcined cordierite ceramic honeycomb carrier. The resulting carrier was then dried at 90 °C for 3 hours, and subjected to calcination under air atmosphere at 550 °C for 1 hour to give the honeycomb noble metal catalyst $Pt(1.6g/L)/Ce_{0.20}Mn_{0.25}La_{0.05}Y_{0.05}Fe_{0.05}Zr_{0.40}O_{1.98}$-$Al_2O_3$. The noble metal Pt was dispersed at the grain boundary and surface of the rare earth manganese-zirconium composite oxide. The above honeycomb noble metal catalyst was tested for catalytic performance, and the resulting maximum NO conversion was 78.53%, the temperature at which the maximum NO conversion occurred was 249 °C. After 650 °C/10% $H_2O$/100 h hydrothermal aging, the maximum NO conversion of the catalyst was 69.83%.

**Example 52**

A certain amount of $Al_2O_3$ was weighed and mixed well with an acidity regulator, an adhesive, and water to prepare a slurry. The prepared slurry was coated onto a cordierite ceramic honeycomb carrier. The coated carrier was dried at 140 °C for 3 hours and then subjected to calcination under air atmosphere at 600 °C for 8 hours. A certain amount of catalyst $Pt(1.0wt\%)/Ce_{0.20}Mn_{0.25}La_{0.05}Y_{0.05}Fe_{0.05}Zr_{0.40}O_{1.9}$ prepared according to Example 44 was weighed and mixed well with an adhesive, an acidity regulator, and water to prepare a slurry. The slurry was coated onto the calcined cordierite ceramic honeycomb carrier. The resulting carrier was dried at 90 °C for 3 hours and then subjected to calcination at 330 °C for 6 hours to give the honeycomb noble metal catalyst $Pt(1.0 g/L)/Ce_{0.20}Mn_{0.25}La_{0.05}Y_{0.05}Fe_{0.05}Zr_{0.40}O_{1.9}$-$Al_2O_3$, with the noble metal Pt dispersed at the grain boundary and surface of the rare earth manganese-zirconium composite oxide. The above catalyst was tested for catalytic performance, and the resulting maximum NO conversion was 79.19%, the temperature at which the maximum NO conversion occurred was 239 °C. After 650 °C/10% $H_2O$/100 h hydrothermal aging, the maximum NO conversion of the catalyst was 70.37%.

**Example 53**

A certain volume of platinum nitrate liquid salt was weighed according to a Pt loading amount of 0.7 wt% and mixed well with alumina solid powders. The resulting mixture was dried at 70 °C for 11 hours, and then subjected to heat treatment at 460 °C for 5 hours, and calcination under $H_2$ reducing atmosphere at 550 °C for 9 hours, to give the catalyst $Pt(0.7wt\%)/Al_2O_3$. The above catalyst was mixed well with an acidity regulator, an adhesive, water, etc. to prepare a slurry. The prepared slurry was coated onto a cordierite ceramic honeycomb carrier. The coated honeycomb carrier was dried at 130 °C for 1 hour and then subjected to calcination under air atmosphere at 400 °C for 6 hours. 60 g of $Ce_{0.20}Mn_{0.20}La_{0.05}Y_{0.05}Zn_{0.10}Zr_{0.40}O_{1.98}$ was weighed and mixed well with an adhesive, an acidity regulator, water, etc. to prepare a slurry. The slurry was coated onto the calcined cordierite ceramic honeycomb carrier. The coated carrier was then dried at 80 °C for 8 hours, and subjected to calcination under air atmosphere at 460 °C for 6 hours to give the honeycomb noble metal catalyst $Pt(1.0g/L)/ Ce_{0.20}Mn_{0.20}La_{0.05}Y_{0.05}Zn_{0.40}Zr_{0.40}O_{1.98}$-$Al_2O_3$. The noble metal Pt was dispersed at the grain boundary and surface of alumina. The above catalyst was tested for catalytic performance, and the resulting maximum NO conversion was 76.10%, the temperature at which the maximum NO conversion occurred was 266 °C. After 650 °C/10% $H_2O$/100 h hydrothermal aging, the maximum NO conversion of the catalyst was 67.83%.

**Example 54**

A certain volume of platinum acetate liquid salt was weighed according to a Pt loading amount of 1.0 g/L and mixed well with 50 g of alumina solid powders, an acidity regulator, an adhesive, water, etc. to prepare a slurry. The prepared slurry was coated onto the first half of a cordierite ceramic honeycomb carrier. The coated carrier was dried at 100 °C for 6 hours and then subjected to heat treatment at 400 °C for 6 hours and calcination under $H_2$ reducing atmosphere at 550 °C for 7 hours. Then 50 g of $Ce_{0.14}Mn_{0.16}La_{0.03}Nd_{0.04}Y_{0.05}Zr_{0.58}O_2$ was weighed and mixed well with an acidity regulator, an adhesive, water, etc. to prepare a slurry. The prepared slurry was coated onto the second half of the cordierite ceramic honeycomb carrier. The coated carrier was dried at 150 °C for 2 hours and then subjected to calcination at 610 °C for 5 hours to give the honeycomb noble metal catalyst $Pt(1.0g/L)/Ce_{0.14}Mn_{0.16}La_{0.03}Nd_{0.04}Y_{0.05}Zr_{0.58}O_2$ -$Al_2O_3$, with the noble metal Pt dispersed at the grain boundary and surface of alumina. The above honeycomb noble metal catalyst was tested for catalytic performance, and the resulting maximum NO conversion was 79.13%, the temperature at which the maximum NO conversion occurred was 249 °C. After 650 °C/10% $H_2O$/100 h hydrothermal aging, the maximum NO conversion of the catalyst was 69.38%.

**Example 55**

A certain volume of platinum nitrate liquid salt was weighed according to a Pt loading amount of 0.7 g/L and mixed well with solid powders of $Ce_{0.20}Mn_{0.15}Y_{0.10}Eu_{0.05}Zr_{0.50}O_{1.99}$, an acidity regulator, water, etc. before adding an adhesive to prepare a slurry. The prepared slurry was coated onto the first half of a cordierite ceramic honeycomb carrier. The carrier was dried at 100 °C for 6 hours. Then an appropriate amount of alumina was mixed well with an acidity regulator, an adhesive, water, etc. to prepare a slurry. The prepared slurry was coated onto the remaining second half of the cordierite ceramic honeycomb carrier. The resulting carrier was dried at 150 °C for 2 hours and then subjected to calcination at 610 °C for 5 hours to give the honeycomb noble metal catalyst $Pt(0.7g/L)/Ce_{0.20}Mn_{0.15}Y_{0.10}Eu_{0.05}Zr_{0.50}O_{1.99}$-$Al_2O_3$, with the noble metal Pt dispersed at the grain boundary and surface of the rare earth manganese-zirconium composite oxide. The above honeycomb noble metal catalyst was tested for catalytic performance, and the resulting maximum NO conversion was 77.71%, the temperature at which the maximum NO conversion occurred was 266 °C. After 650 °C/10% $H_2O$/100 h hydrothermal aging, the maximum NO conversion of the catalyst was 64.93%.

**Example 56**

A certain volume of platinum nitrate liquid salt was weighed according to a Pt loading amount of 1.5 g/L and mixed well with a certain amount of alumina, an acidity regulator, water, etc. before adding an adhesive to prepare a slurry. The prepared slurry was coated onto the first half of a cordierite ceramic honeycomb carrier. The coated carrier was dried at 80 °C for 9 hours, and subjected to heat treatment at 380 °C for 6 hours, and calcination under $H_2$ reducing atmosphere at 610 °C for 6 hours. Then a certain amount of $Ce_{0.40}Mn_{0.10}La_{0.05}Nd_{0.05}W_{0.20}Zr_{0.20}O_{1.98}$ was weighed and mixed well with an adhesive, an acidity regulator, water, etc. to prepare a slurry. The slurry was coated onto the remaining second half of the cordierite ceramic honeycomb carrier. The resulting carrier was dried at 150 °C for 3 hours and then subjected to calcination at 460 °C for 3 hours to give the honeycomb noble metal catalyst $Pt(1.5g/L)/Ce_{0.40}Mn_{0.10}La_{0.05}Nd_{0.05}W_{0.20}Zr_{0.20}O_{1.98}$ -$Al_2O_3$, with the noble metal Pt dispersed at the grain boundary and surface of the rare earth manganese-zirconium composite oxide. The above catalyst was tested for catalytic performance, and the resulting maximum NO conversion was 81.79%, the temperature at which the maximum NO conversion occurred was 246 °C. After 650 °C/10% $H_2O$/100 h hydrothermal aging, the maximum NO conversion of the catalyst was 71.51%.

**Example 57**

A certain volume of platinum nitrate liquid salt was weighed according to a Pt loading amount of 1.3 g/L. Half of the platinum nitrate liquid salt was mixed well with $Ce_{0.40}Mn_{0.10}La_{0.05}Nd_{0.05}Pr_{0.20}Zr_{0.20}O_{1.98}$, an acidity regulator, water, etc. before mixing well with an adhesive to prepare a coating slurry. The slurry was coated onto the first half of a cordierite ceramic honeycomb carrier. The coated carrier was dried at 80 °C for 9 hours and subjected to heat treatment at 380 °C for 6 hours and calcination under $H_2$ reducing atmosphere at 610 °C for 6 hours. The rest half of the platinum nitrate liquid salt was mixed well with alumina, an acidity regulator, water, etc. before mixing well with an adhesive to prepare a slurry, which was coated onto the remaining half of the cordierite ceramic honeycomb carrier. The resulting carrier was dried at 150 °C for 3 hours and subjected to heat treatment at 460 °C for 6 hours and calcination under $H_2$ reducing atmosphere at 600 °C for 5 hours to give the honeycomb noble metal catalyst $Pt(1.3g/L)/Ce_{0.40}Mn_{0.10}La_{0.05}Nd_{0.05}Pr_{0.20}Zr_{0.20}O_{1.98}$ -$Al_2O_3$, with the noble metal Pt dispersed at the grain boundary and surface of the rare earth manganese-zirconium composite oxide and alumina. The above catalyst was tested for catalytic performance, and the resulting maximum NO conversion was 80.16%, the temperature at which the maximum NO conversion occurred was 251 °C. After 650 °C/10% $H_2O$/100 h hydrothermal aging, the maximum NO conversion of the catalyst was 70.09%. The above test process involves sampling an appropriate amount of catalyst with noble metal loaded at surface and at grain boundary and a cut sample of honeycomb noble metal catalyst for testing their catalytic performances, respectively. The catalyst activity evaluation test was performed in a microreactor, and the contents of NO, $NO_2$ and $NO_x$ at the corresponding temperatures were recorded by an infrared gas analyzer, so as to calculate the maximum NO conversion of each fresh catalyst sample and the corresponding temperature, as well as the maximum NO conversion after hydrothermal aging at 650 °C/10% $H_2O$/100 h. The catalytic test used a simulated automobile exhaust gas mixture with the following content of each component (volume percentage): 8% oxygen, 10% water, 500 ppm carbon monoxide, 500 ppm nitric oxide, 200 ppm $C_3H_6$, 100 ppm CsHs; the balance gas being nitrogen. Reaction temperature setting: from room temperature to 400 °C at a rate of 20 °C/min for a reaction time of 20 min.

As can be seen from the above experimental results, using the catalyst with noble metal loaded at surface and at grain boundary and honeycomb noble metal catalyst provided in the examples of the present invention, the NO conversions of the catalysts for both fresh and aged samples are significantly higher than those of the catalyst samples from comparative samples, and the temperature at which the maximum NO conversion of the fresh catalyst sample occurs is lower than those of the catalyst samples from comparative samples. The diffusion of noble metal at the grain boundary and surface enables to form a multiphase interface, which can reduce the activation energy of lattice oxygen and increase the quantity of active oxygen, while avoiding the migration, agglomeration, and growth of the noble metal at high temperatures. Therefore, the catalyst with noble metal loaded at surface and at grain boundary and the honeycomb noble metal catalyst provided in the examples of the present invention can significantly improve the low-temperature catalytic activity and high-temperature stability for NO oxidation.

In conclusion, The present invention relates to a catalyst with noble metal loaded at surface and at grain boundary and a preparation method and application thereof, wherein the noble metal G is dispersed at the grain boundary and surface of alumina and/or a rare earth manganese-zirconium composite oxide to form a multiphase interface, which achieves the following beneficial technical effects: firstly, the multiphase interface has a larger steric hindrance and a stronger anchoring effect, which can inhibit the migration, agglomeration, and growth of the noble metal at high temperatures, increase the high-temperature stability of the noble metal, and reduce the usage of the noble metal; secondly, the multiphase interface exhibits a synergistic catalytic effect, which can reduce the activation energy of lattice oxygen and increase the quantity of active oxygen, thereby enhancing the NO oxidation and low-temperature catalytic activity.

It will be understood that the specific embodiments described herein are only used to explain the invention, and are not intended to limit the invention. Therefore, any modification, equivalent substitution, improvement, etc. made without departing from the spirit and principle of the invention should be included within the scope of the claims of the invention. In addition, the appended claims of the present invention are intended to cover the full range of variations and modifications that fall within the scope and boundaries of the appended claims, or equivalent forms of such scope and boundaries.

**Claims**

1. A catalyst with noble metal loaded at surface and at grain boundary, **characterized in that**, the catalyst comprises a noble metal G, alumina and/or a rare earth manganese-zirconium composite oxide, wherein the noble metal G is dispersed at the grain boundary and at the surface of the alumina and/or the rare earth manganese-zirconium composite oxide, and the rare earth manganese-zirconium composite oxide has the formula $RE_aMn_bZr_cM_dO_{(2-\delta)}D_\beta$, where

   RE is a rare earth element, M is a cationic doping element, and D is an anionic doping element;

   $$0.1 \leq a \leq 0.5,\ 0.05 \leq b \leq 0.3,\ 0.2 \leq c \leq 0.8,\ 0 \leq d \leq 0.2,\ 0 \leq \delta \leq 0.1,\ 0 \leq \beta \leq 0.1,\ a+b+c+d=1.$$

2. A honeycomb noble metal catalyst, **characterized in that**, the catalyst comprises a honeycomb carrier, a noble metal G, and an active coating, wherein the active coating contains alumina and/or a rare earth manganese-zirconium composite oxide $RE_aMn_bZr_cM_dO_{(2-\delta)}D_\beta$, the noble metal G is dispersed at the grain boundary and surface of the active coating, where

   RE is a rare earth element, M is a cationic doping element, and D is an anionic doping element;

   $$0.1 \leq a \leq 0.5,\ 0.05 \leq b \leq 0.3,\ 0.2 \leq c \leq 0.8,\ 0 \leq d \leq 0.2,\ 0 \leq \delta \leq 0.1,\ 0 \leq \beta \leq 0.1,\ a+b+c+d=1.$$

3. The honeycomb catalyst according to claim 2, **characterized in that** the rare earth manganese-zirconium composite oxide accounts for 0 to 100%, preferably 30 to 70%, of the total mass of the active coating.

4. The catalyst according to any one of claims 1-3, **characterized in that** the noble metal G at the grain boundary and surface is in a metallic state, or in a metallic and oxidization state.

5. The catalyst according to any one of claims 1-4, **characterized in that** the noble metal G comprises one or a combination of more than one selected from Pt, Pd, Rh, Ir, Os, Ru, Au, and Ag, preferably one or a combination of more than one selected from Pt, Pd, Rh, and Ru, and further preferably a combination of Pt and Pd.

6. The catalyst according to any one of claims 1-5, **characterized in that**, the rare earth element RE comprises one or a combination of more than one selected from La, Ce, Pr, Nd, Sm, Eu, Gd, Tb, Dy, Ho, Er, Tm, Yb, Lu, Y, and Sc, preferably one or a combination of more than one selected from La, Ce, Pr, Nd, Sm, Eu, Gd, Yb, and Y; the doping element M is one or a combination of more than one selected from a transition metal element, an alkaline earth metal element, Al, Si, and Sn; the doping element D comprises one or a combination of more than one selected from anions N, P, and F.

7. The catalyst according to claim 6, **characterized in that** the transition metal element M comprises one or a combination of more than one selected from Fe, Co, Ni, Cu, Zn, Ti, Hf, V, Cr, Nb, Mo, and W, preferably one or a combination of more than one selected from Fe, Co, Ni, Cu, and Hf; the alkaline earth metal element is one or a combination of more than one selected from Mg, Ca, Sr, and Ba, preferably one or a combination of more than one selected from Sr and Ba.

8. The catalyst with noble metal loaded at surface and at grain boundary according to claim 1, **characterized in that** the loading amount of the noble metal G in the catalyst is 0.01% to 2% by mass, preferably 0.1% to 1% by mass.

9. The honeycomb noble metal catalyst according to claim 2, **characterized in that** the loading amount of the noble metal G in the catalyst is 0.03 to 2.0 g/L, preferably 0.15 to 1.5 g/L.

10. The catalyst according to any one of claims 1-9, **characterized in that** the rare earth manganese-zirconium composite oxide in the catalyst comprises a core-shell structure having an inner core comprising a rare earth and zirconium element and an outer shell comprising a rare earth and manganese element.

11. The catalyst according to any one of claims 1-9, **characterized in that** the rare earth manganese-zirconium composite oxide in the catalyst comprises a rare earth zirconium-based oxide with gradient distribution of elements.

12. The honeycomb noble metal catalyst according to claim 2, **characterized in that** the honeycomb carrier is made of a porous ceramic or metal.

13. A method for preparing the catalyst with noble metal loaded at surface and at grain boundary according to any one of claims 1, 4-8, and 10-11, **characterized by** comprising the steps of:

> S1. mixing the rare earth manganese-zirconium composite oxide and/or alumina evenly with a liquid salt of the noble metal G, and drying;
> S2. performing one or two heat treatments on the product obtained in step S1;
> S3. performing one or two reductive calcinations on the product obtained in step S2 under air or a reducing atmosphere, to obtain a catalyst with the noble metal loaded at the grain boundary and surface of the rare earth manganese-zirconium composite oxide and/or alumina.

14. A method for preparing the honeycomb noble metal catalyst according to any one of claims 2-7 and 9-12, **characterized in that** the honeycomb noble metal catalyst is coated with one or more coating materials in a layered or partitioned manner, the one or more coating material being selected from alumina, a rare earth manganese-zirconium composite oxide, alumina loaded with the noble metal at the grain boundary and surface, a rare earth manganese-zirconium composite oxide loaded with the noble metal at the grain boundary and surface, and a mixture of a rare earth manganese-zirconium composite oxide and alumina loaded with the noble metal at their grain boundaries and surfaces,
the method comprising the following steps:

> A1. preparing a coating slurry by mixing the one or more coating materials with an adhesive, an acidity regulator and water evenly in one or more steps;
> A2. coating the coating slurry obtained in step A1 onto the honeycomb carrier in one or more steps, or onto the honeycomb carrier in a layered or partitioned manner, and drying;
> A3. performing heat treatment and/or calcination on the product obtained in step A2 under air or a reducing atmosphere, to obtain the honeycomb noble metal catalyst.

15. A method for preparing the honeycomb noble metal catalyst according to any one of claims 2-7 and 9-12, **characterized by** preparing a coating slurry by mixing the rare earth manganese-zirconium composite oxide and/or alumina, a liquid salt of the noble metal G, an adhesive, an acidity regulator and water evenly in one or more steps; coating the slurry onto a honeycomb carrier in one or more steps, or onto the honeycomb carrier in a layered or partitioned manner, and drying; performing heat treatment and/or reductive calcination on the dried honeycomb carrier under a reducing atmosphere, to give the honeycomb noble metal catalyst.

16. The method according to any one of claims 13 to 15, **characterized in that**, the heat treatment temperature is 200 to 750 °C, and the heat treatment time is 0.5 h to 24 h; preferably, the heat treatment temperature is 400 to 700 °C, and the heat treatment time is 1 h to 12 h.

17. The method according to any one of claims 13 to 15, **characterized in that**, the calcination temperature is 400 to 850 °C, and the calcination time is 0.5 to 24 h; preferably, the calcination temperature is 450 to 750 °C, and the calcination time is 1 h to 12 h.

18. The method according to claim 13 or 15, **characterized in that**, the liquid salt of the noble metal G comprises one or a combination of more than one selected from molten salt or aqueous solution of chloride, nitrate, acetate, and citrate.

19. The method according to any one of claims 13 to 15, **characterized in that**, the reducing atmosphere comprises one or more selected from CO and $H_2$.

**20.** Use of the catalyst according to any one of claims 1-12 in the fields of vehicle exhaust purification, industrial organic exhaust treatment, catalytic combustion of natural gas, petrochemicals, hydrogen energy, and batteries.

A liquid salt of
noble metal G          $RE_aMn_bZr_cM_dO_{(2-\delta)}D_\beta$

↓

Mixing

↓

Drying and
heat treatment

↓

Reductive
calcination

↓

$G/RE_aMn_bZr_cM_dO_{(2-\delta)}D_\beta$

FIG. 1

$G/RE_aMn_bZr_cM_dO_{(2-\delta)}D_\beta$   Alumina   An adhesive, an
acidity regulator, etc.

↓

Preparing a slurry

↓

Coating

↓

Drying and heat treatment

↓

Calcination

↓

Honeycomb noble metal catalyst

FIG. 2

| | **INTERNATIONAL SEARCH REPORT** | International application No. |
|---|---|---|
| | | **PCT/CN2023/075761** |

**A. CLASSIFICATION OF SUBJECT MATTER**

B01J23/38(2006.01)i;B01J37/02(2006.01)i;B01D53/94(2006.01)i

According to International Patent Classification (IPC) or to both national classification and IPC

**B. FIELDS SEARCHED**

Minimum documentation searched (classification system followed by classification symbols)

IPC:B01J23/-、 B01J37/- 、 B01D53/-

Documentation searched other than minimum documentation to the extent that such documents are included in the fields searched

Electronic data base consulted during the international search (name of data base and, where practicable, search terms used)

CNABS, CNTXT, CNKI, VEN, Web of Science: 催化, 氧化铝, 贵金属, 稀土, 锰, 核壳, cata+, Al2O3, alumina, noble, Rare earth, Mn, core, shell

**C. DOCUMENTS CONSIDERED TO BE RELEVANT**

| Category* | Citation of document, with indication, where appropriate, of the relevant passages | Relevant to claim No. |
|---|---|---|
| X | US 2002045543 A1 (TOYOTA CHUO KENKYUSHO K. K.) 18 April 2002 (2002-04-18) description, paragraphs 14-49, and embodiment 1 | 1-20 |
| Y | US 2002045543 A1 (TOYOTA CHUO KENKYUSHO K. K.) 18 April 2002 (2002-04-18) description, paragraphs 14-49, and embodiment 1 | 1-20 |
| Y | CN 112439408 A (GRIREM ADVANCED MATERIALS CO., LTD. et al.) 05 March 2021 (2021-03-05) description, paragraphs 31-48, and embodiment 2 | 1-20 |
| Y | CN 111939894 A (HEBEI XIONG'AN RARE EARTH FUNCTIONAL MATERIALS INNOVATION CENTER CO., LTD. et al.) 17 November 2020 (2020-11-17) description, paragraphs 5-37 | 1-20 |
| Y | JP H10290931 A (HINO MOTORS LTD.) 04 November 1998 (1998-11-04) description, paragraphs 7-30, and figure 1 | 1-20 |
| Y | JP 2003200047 A (TOYOTA MOTOR CORP.) 15 July 2003 (2003-07-15) claim 1, and description, paragraphs 2-21, and embodiment 2 | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 May 2023** | **23 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/075761**

| Patent document cited in search report | | | Publication date (day/month/year) | Patent family member(s) | | | Publication date (day/month/year) |
|---|---|---|---|---|---|---|---|
| US | 2002045543 | A1 | 18 April 2002 | JP | 2002066335 | A | 05 March 2002 |
| CN | 112439408 | A | 05 March 2021 | None | | | |
| CN | 111939894 | A | 17 November 2020 | None | | | |
| JP | H10290931 | A | 04 November 1998 | None | | | |
| JP | 2003200047 | A | 15 July 2003 | JP | 3879992 | B2 | 14 February 2007 |

Form PCT/ISA/210 (patent family annex) (July 2022)

## REFERENCES CITED IN THE DESCRIPTION

**Patent documents cited in the description**

- CN 202210135505
- CN 201910833257
- CN 202010982979

**Non-patent literature cited in the description**

- **RUSSELL A ; EPLING W S.** *Catalysis Reviews,* 2011, vol. 53 (4), 337-423
- **CALISKAN H ; MORI K.** *Energy,* 2017, vol. 128, 128-144